# EUROPEAN PATENT APPLICATION

(11) **EP 3 133 542 A1**
(43) Date of publication of application: **22.02.2017**
(21) Application number: 16181779.6
(22) Date of filing: 28.07.2016
(51) Int. Cl.: G06Q 10/06

(54) **TASK EXECUTION SUPPORT METHOD, TASK EXECUTION SUPPORT DEVICE, AND TASK EXECUTION SUPPORT PROGRAM**

(30) Priority: 21.08.2015 JP 2015164232
(71) Applicant: FUJITSU LIMITED, 211-8588 Kanagawa (JP)
(72) Inventor: NODA, Masahide, Kawasaki-shi, Kanagawa 211-8588 (JP); TAIRA, Kei, Kawasaki-shi, Kanagawa 211-8588 (JP); SUMIOKA, Motoshi, Kawasaki-shi, Kanagawa 211-8588 (JP); OHNO, Takashi, Kawasaki-shi, Kanagawa 211-8588 (JP); MATSUMOTO, Tatsuro, Kawasaki-shi, Kanagawa 211-8588 (JP)
(74) Representative: Haseltine Lake LLP

(57) **Abstract**

A task execution support device (1), in a first task flow relating to a plurality of tasks, when receiving an execution support request of a task included in the first task flow, specifies (S107) a second task flow group relating to the first task flow based on the received support request and gets an execution status of each task flow included in the specified second task flow group. The task execution support device, based on the obtained execution status of each task flow, extracts (S108) executers who are able to respond to the support request among the executers of each task flow. Then, the task execution support device provides (S109-S113) support information of task execution executed by the extracted executers for a support requester of the task execution.

## Description

### FIELD

The embodiment discussed herein is related to a task execution support method and the like.

### BACKGROUND

There are technologies for extracting persons in charge who are assumed to have knowhow of a task by recording work item information including persons in charge who have carried out the same work or similar works (tasks) in a database (for example, see Japanese Laid-open Patent Publication No. 2004-054332).

For example, a schedule manager checks progress statuses that are displayed, recognizes a progress delay of a certain work item, and, in a case where a recovery measure is desired to be reviewed, by using a search unit, searches a work process database for attribute information of the work item in which the delay occurs and displays the retrieved attribute information on an output device. In addition, at the same time, the schedule manager searches the work process database for attribute information of work items similar to a certain work item and displays the retrieved attribute information. The schedule manager reviews recovery measures for the work item in which the delay occurs based on the displayed information and determines a recovery measure such as a transfer of a person in charge of a work item similar to the work item for support or the like.

However, in the conventional technology, there is a problem in that it is difficult to extract a supporter who has appropriate knowhow and has a little influence on the execution of his task at the time of supporting the execution of a task.

For example, in the conventional technology, persons in charge of work items similar to a work item are extracted as supporters based on attribute information that is the same as or similar to that of a work item in which a delay occurs. However, there is concern that, while the extracted supporters have executed the task in which the delay occurs and know only old knowhow, and accordingly, there are cases where the supporters do not have appropriate knowhow. In addition, the extracted supporters are not necessarily supporters having a little influence of the support on the execution of their tasks.

Accordingly, it is desirable to achieve a smooth task support.

### SUMMARY

According to an embodiment of an aspect, a task execution support method is performed by a computer. The task execution support method includes specifying, when receiving an execution support request of a task included in a first task group, one or a plurality of second task groups relating to the first task group based on the received execution support request, the first task group including a plurality of tasks based on an execution sequence using a processor. The task execution support method includes getting an execution status of each task group of the specified one or plurality of second task groups. The task execution support method includes extracting executers who are able to respond to the support request among executers of the determined each task group based on the obtained execution status of the each task group using the processor. The task execution support method includes providing support information of task execution executed by the extracted executers for a support requester of the task execution using the processor.

### BRIEF DESCRIPTION OF DRAWINGS

The invention is described, by way of example only, with reference to the drawings, in which:
FIG. 1 is a diagram that illustrates a configuration of a system including a task execution support device according to a first embodiment;
FIG. 2 is a diagram that illustrates an example of the content of a task flow DB;
FIG. 3 is a diagram that illustrates an example of the data structure of a task execution state accumulating unit;
FIG. 4 is a diagram that illustrates an example of the content of task information;
FIG. 5 is a diagram that illustrates an example of the process of a communication access unit according to the first embodiment;
FIG. 6 is a diagram that illustrates an example of a flowchart of a communication target determination process according to the first embodiment;
FIG. 7A is a diagram (1) that illustrates a specific example of a communication determination process according to the first embodiment;
FIG. 7B is a diagram (2) that illustrates a specific example of the communication determination process according to the first embodiment;
FIG. 8 is a diagram that illustrates an example of the sequence of a task execution support process according to the first embodiment;
FIG. 9 is a diagram that illustrates an example of the sequence of execution of communication according to the first embodiment;
FIG. 10 is a diagram that illustrates an example of a flowchart of a communication target determination process according to a second embodiment;
FIG. 11A is a diagram (1) that illustrates a specific example of a communication determination process according to the second embodiment;
FIG. 11B is a diagram (2) that illustrates a specific example of the communication determination process according to the second embodiment;
FIG. 11C is a diagram (3) that illustrates a specific example of the communication determination process according to the second embodiment;
FIG. 12 is a diagram that illustrates a configuration of a system including a task execution support device according to a third embodiment;
FIG. 13 is a diagram that illustrates an example of the data structure of a task DB;
FIG. 14 is a diagram that illustrates an example of a flowchart of a communication target determination process according to the third embodiment;
FIG. 15 is a diagram that illustrates a specific example of a communication determination process according to the third embodiment;
FIG. 16 is a diagram that illustrates a configuration of a system including a task execution support device according to a fourth embodiment;
FIG. 17 is a diagram that illustrates an example of the data structure of a task execution state accumulating unit (consultation information);
FIG. 18 is a diagram that illustrates an example of a flowchart of a communication target determination process according to the fourth embodiment;
FIG. 19 is a diagram that illustrates a specific example of a communication determination process according to the fourth embodiment; and
FIG. 20 is a diagram that illustrates an example of a computer executing a task execution support program.

### DESCRIPTION OF EMBODIMENTS

Preferred embodiments of the present invention will be explained with reference to accompanying drawings. However, the present invention is not limited to the embodiments.

### [a] First Embodiment

### Configuration of Task Execution Support System

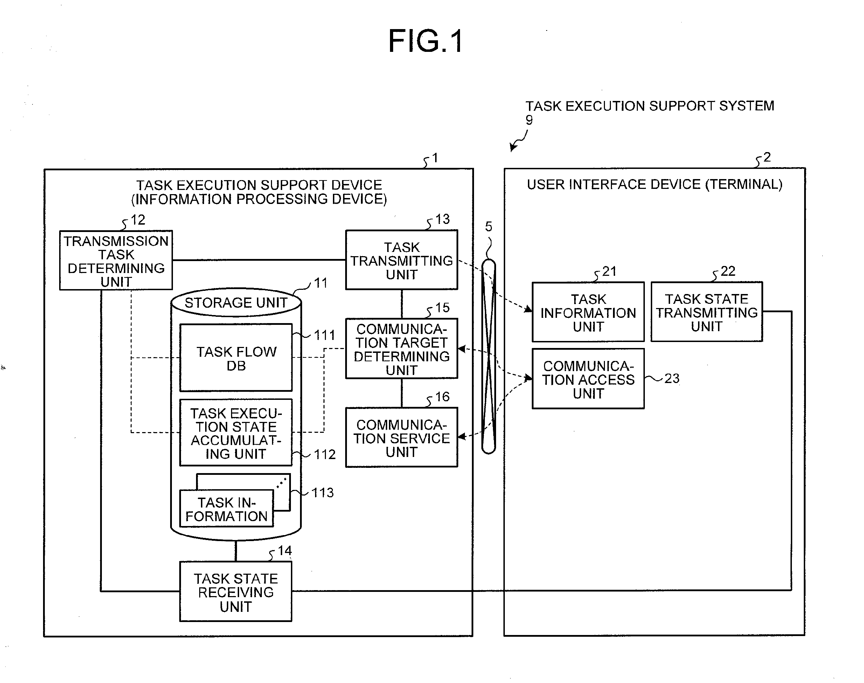

FIG. 1 is a diagram that illustrates the configuration of a system including a task execution support device according to a first embodiment. A task execution support system 9 includes a task execution support device 1 and a user interface device 2. The task execution support device 1 is connected to the user interface device 2 through a network 5. The task execution support device 1, for example, corresponds to an information processing device.

The task execution support device 1 is an electronic device that can be used by an executer of a task. When a task is executed, the task execution support device 1 communicates with the user interface device 2 of the user that can support the executed task. The user interface device 2 corresponds to a mobile terminal device represented by a smartphone but is not limited thereto. The user interface device 2 may be a notebook or desktop personal computer (PC), a personal digital assistant (PDA), or the like.

The task execution support device 1 is premised to execute the following processes. The task execution support device 1 generates a task flow relating to a plurality of tasks based on the execution sequence of the plurality of tasks and manages an execution status of the generated task flow. The task execution support device 1 automatically adjusts a user's schedule by using the task flow and registers tasks in each user's schedule. When it is time based on the schedule, the task execution support device 1 arranges resources of the tasks to the user interface device 2 and gives a notification to the user interface device 2 and supports the user interface device 2 side to execute the tasks. The task execution support device 1, for example, corresponds to an information processing device.

Under such a premise, in a case where a task execution support request is received from a certain user, the task execution support device 1, in addition to a user actually executing a support-requested task, selects a user executing a task on the actually same task flow among users who have completed the execution of the task. Then, the task execution support device 1 determines the selected user as a target for communication with the user who has requested the support. The "user executing the task" described here represents a user who is in executing the support-requested task and is capable of utilizing knowhow. The "user executing a task on the actually same task flow" represents a user who executes a task that is the same as or similar to the support-requested task and is capable of utilizing knowhow. Here, the task flow may be a task flow that is not the same as the task flow of the support-requested task but is similar to the support-requested task flow and may be a task flow including a task relating to the support-requested task.

Here, a "task" is used as a term that may include the overall action performed by a person. While an example of the "task" is a job-related work, the task is not limited thereto but may include actions such as private traveling or dinning together, and the like. In addition, a "task" may include resting between a plurality of actions or an action of moving to a specific place for executing a next action. A "task flow" represents a flow of tasks in a predetermined work. Here, the work, for example, represents an inspection work or an ordering work. In addition, "task information" represents information that defines the content of a task. In the "task information", a specific content of a work, an executer of a task, a time for the execution of a task, a place at which a task is executed, a tool used for executing a task, and the like may be included. In addition, in the "task information", task information defining scheduled start time and scheduled end time of a task and task information not defining such times may be included. An example of the content of the "task information" will be described later. "Scheduling" represents setting at least one of scheduled start time and scheduled end time of a task for which the scheduled start time and the scheduled end time are not set or changing and resetting scheduled start time or scheduled end time for a task for which at least one of the scheduled start time and the scheduled end time is set. A "schedule" represents information that represents a result of "scheduling". In addition, a representation displaying a "schedule" in the form of the sense of sight, the sense of hearing, the sense of smell, or the like that can be perceived by a person will be referred to as a "schedule table".

### Configuration of Task Execution Support Device

As illustrated in FIG. 1, the task execution support device 1 includes: a storage unit 11; a transmission task determining unit 12; a task transmitting unit 13; a task state receiving unit 14; a communication target determining unit 15; and a communication service unit 16.

The storage unit 11 corresponds to a storage device such as a nonvolatile semiconductor memory device, for example, including a flash memory, a ferroelectric random access memory (registered trademark; FRAM), and the like. In addition, the storage unit 11 includes a task flow database (DB) 111 and a task execution state accumulating unit 112. The task flow DB 111 stores information of a task flow. The task execution state accumulating unit 112 stores the execution state of a task for each user.

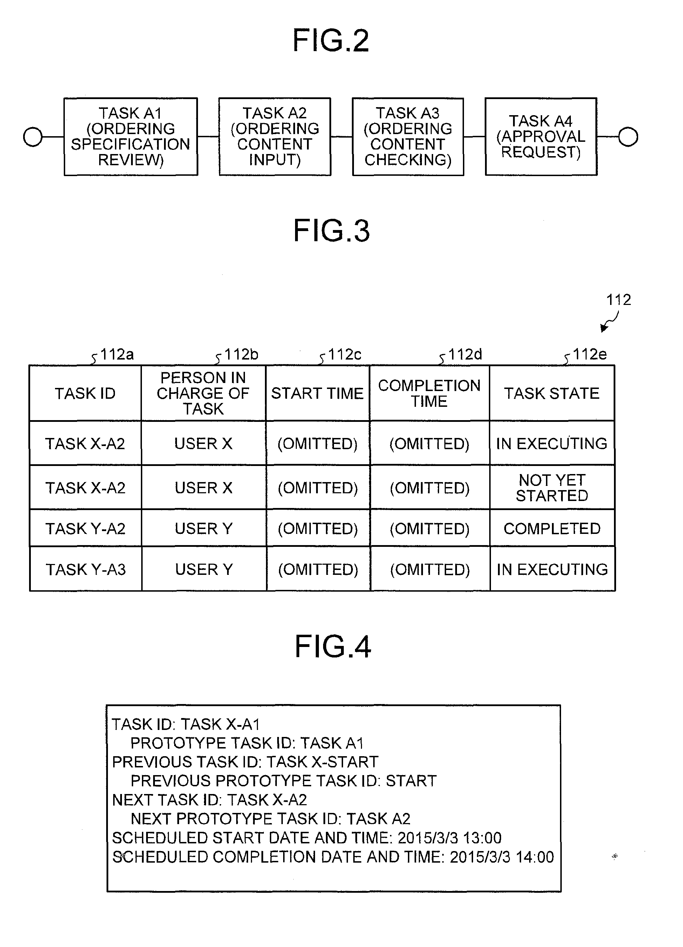

Here, the content of the task flow DB 111 will be described with reference to FIG. 2. FIG. 2 is a diagram that illustrates an example of the content of the task flow DB. As illustrated in FIG. 2, a task flow of an ordering work is represented. In such a task flow, the execution sequence of a task A1 (ordering specification review), a task A2 (ordering content input), a task A3 (ordering content checking), and a task A4 (approval request) is defined. Here, "A1", "A2", "A3", and "A4" represent prototype identifications (ID) of tasks.

An example of the data structure employed in the task execution state accumulating unit 112 will be described with reference to FIG. 3. FIG. 3 is a diagram that illustrates an example of the data structure employed in the task execution state accumulating unit. As illustrated in FIG. 3, the task execution state accumulating unit 112 stores a person 112b in charge of a task, start time 112c, completion time 112d, and a task state 112e in association with a task ID 112a. The task ID 112a represents an ID relating to a task. The task ID 112a is formed by an ID of a person in charge of the task and a prototype ID of the task. For example, in a case where the task ID 112a is "task X-A2", the task ID 112a is formed by "X" as an ID of a person in charge and "A2" as a prototype ID of a task. The person 112b in charge of a task represents an ID of a person in charge of the task represented by the task ID 112a. The start time 112c represents start time of a task represented by the task ID 112a. The completion time 112d represents completion time of a task represented by the task ID 112a. The task state 112e represents an execution state of a task represented by the task ID 112a. In the task state 112e, for example, "in executing", "not yet started", and "completion" are included. For example, in a case where the task ID 112a is "task X-A2", "user X" as the person 112b in charge of the task and "in executing" as the task state 112e are stored.

An example of the content of the task information will be described with reference to FIG. 4. FIG. 4 is a diagram that illustrates an example of the content of the task information. As illustrated in FIG. 4, in a task information 113, a task ID, a previous task ID, a next task ID, a scheduled start date and time and a scheduled completion date and time are defined. The task ID represents an ID relating to a task and represents the same meaning as the task ID 112a stored in the task execution state accumulating unit 112. To the task ID, information of a prototype task ID is added. The previous task ID represents a task ID of a previous task of a task represented by the task ID. To the previous task ID, information of a previous prototype task ID is added. The next task ID represents a task ID of a next task of a task represented by the task ID. To the next task ID, information of a next prototype task ID is added. The scheduled start date and time is scheduled start date and time at which the execution of a task represented by the task ID is started. The scheduled completion date and time is scheduled date and time at which the execution of a task represented by the task ID is to be completed.

For example, in a case where the task ID is "task X-A1", "X-start" as the previous task ID and "task X-A2" as the next task ID are set. "2015/3/3 13:00" as the scheduled start date and time and "2015/3/3 14:00" as the scheduled completion date and time are set. In addition, "task A1" as the prototype task ID of the task ID, "task X-start" as the prototype task ID of the previous task ID, and "task A2" as the prototype task ID of the next task ID are set.

Referring back to FIG. 1, the transmission task determining unit 12 determines a task to be executed by the user interface device 2 based on the schedule. The transmission task determining unit 12 outputs a task ID of the determined task to the task transmitting unit 13.

The task transmitting unit 13 transmits task information of the task determined by the transmission task determining unit 12 to the user interface device 2. In the task information, for example, a task ID and a task name are included.

The task state receiving unit 14 receives the execution state of a task from the user interface device 2 and updates the task state stored in the task execution state accumulating unit 112 with the received execution state of the task. For example, the task state receiving unit 14 receives a task ID and a task state from the user interface device 2. The task state receiving unit 14 updates a task state 112e corresponding to the task ID 112a stored in the task execution state accumulating unit 112 that matches the received task ID with the received task state.

In a case where a task execution support request is received from the user interface device 2, the communication target determining unit 15 specifies a task flow group that is the same as a task flow including a task that is a support target based on the received support request. For example, the communication target determining unit 15 specifies a task flow group that is the same as a task flow including a task that is the support target based on the task execution state accumulating unit 112.

In addition, the communication target determining unit 15 gets the execution status of each task flow of the specified task flow group and extracts executers who can respond to the support request among executers of the task flow group based on the obtained execution status of each task flow. For example, the communication target determining unit 15 gets an execution status of the task that is the support target included in each task flow of the specified task flow group based on the task execution state accumulating unit 112. The communication target determining unit 15 selects users whose execution status of the task that is the support target included in the task flow is currently in executing. In addition, the communication target determining unit 15 selects users executing tasks on the actually same task flow from among users whose execution status of the task that is the support target included in the task flow is execution-completed. In other words, the communication target determining unit 15 excludes users executing tasks on actually different task flows from communication targets. The reason for this is that a user executing a task on an actually different task flow needs to switch his way of thinking from the executing task to the task to be supported, and it is supposed that the user is not able to efficiently support the execution of the task. The communication target determining unit 15 determines the selected users as targets for communication with the user requesting the support. Then, the communication target determining unit 15 transmits a user list of users that are the determined communication targets to the user interface device 2 that has requested the support.

In a case where a communication start request is received from the user interface device 2, the communication service unit 16 causes communication to be performed based on the received start request. For example, the communication service unit 16 receives a communication start request including a task ID and a user list. The communication service unit 16 causes communication between the user interface device 2 of each user included in the user list included in the communication start request and the user interface device 2 that has transmitted the communication start request. In other words, the communication service unit 16 transmits a communication request to the user interface device 2 of each user included in the user list. Here, the method of the communication that is caused to be performed by the communication service unit 16 may be any arbitrary method. For example, real-time communication such as chatting using texts or voices may be used. In addition, delayed communication using a bulletin board or the like may be used. Furthermore, communication may be performed by associating a log with the information of each task for holding. In addition, a reply may be made by the communication service unit 16 with information used for referring to support information of the execution of tasks accumulated in the past.

### Configuration of User Interface Device

The user interface device 2 includes: a task information unit 21; a task state transmitting unit 22; and a communication access unit 23.

The task information unit 21 receives the task information of a task transmitted from the task execution support device 1 and displays the received task information on the user interface (UI). In the UI, for example, a monitor is included. In the task information, for example, a task ID and a task name are included. In other words, the task information unit 21 displays the task information, thereby supporting a user using the user interface device 2 to execute the task.

The task state transmitting unit 22 transmits the execution state of a task. For example, in a case where a request for transmitting the task state is received from the monitor, the task state transmitting unit 22 transmits a task ID and the task state to the task execution support device 1. In the task state, "in executing", "not yet started, and "completion" are included.

In a case where a task execution support request is received from the UI, the communication access unit 23 transmits the received task execution support request to the task execution support device 1. In the task execution support request, a task ID is included.

In addition, in a case where a response to the task execution support request is received from the task execution support device 1, the communication access unit 23 transmits a communication start request to the task execution support device 1 in response to the received response. For example, the communication access unit 23 receives a user list of users who are communication targets as the response to the task execution support request. The communication access unit 23 transmits a communication start request including the received user list and a task ID of the task that is the support target to the task execution support device 1. Here, the user list included in the communication start request may be a user list selected by a user through the UI.

Furthermore, in a case where a communication request is received from the task execution support device 1, the communication access unit 23 may perform the following process in a case where a task that is the support target included in the received request is not currently executed. The communication access unit 23 may request the task execution support device 1 to acquire information at the time of execution of the task. In the information at the time of execution of the task, for example, the name of the task and the date and time at which the task is executed are included. In addition, in the information at the time of execution of a task, for example, a place at which the task is executed and a URL of a material referred to at the time of the execution of the task may be included. In this way, also in a case where the task that is requested to support is actually not in executing, the communication access unit 23 can give notice of the status at the time of the execution.

In addition, users included in the user list selected by the user may be selected by the user who has requested the support based on a purpose. For example, in a case where the user who has requested the support has the purpose of exchanging knowhow, a user executing a task that is the support target may be selected. On the other hand, in a case where the user who has requested the support has the purpose of receiving teaching of knowhow, a user who has completed the task that is the support target and is in executing a next task of the task may be selected. In addition, in a case where the user who has requested the support has the purpose of teaching knowhow, a user who starts the task that is the support target from now and is in executing a previous task of the task may be selected.

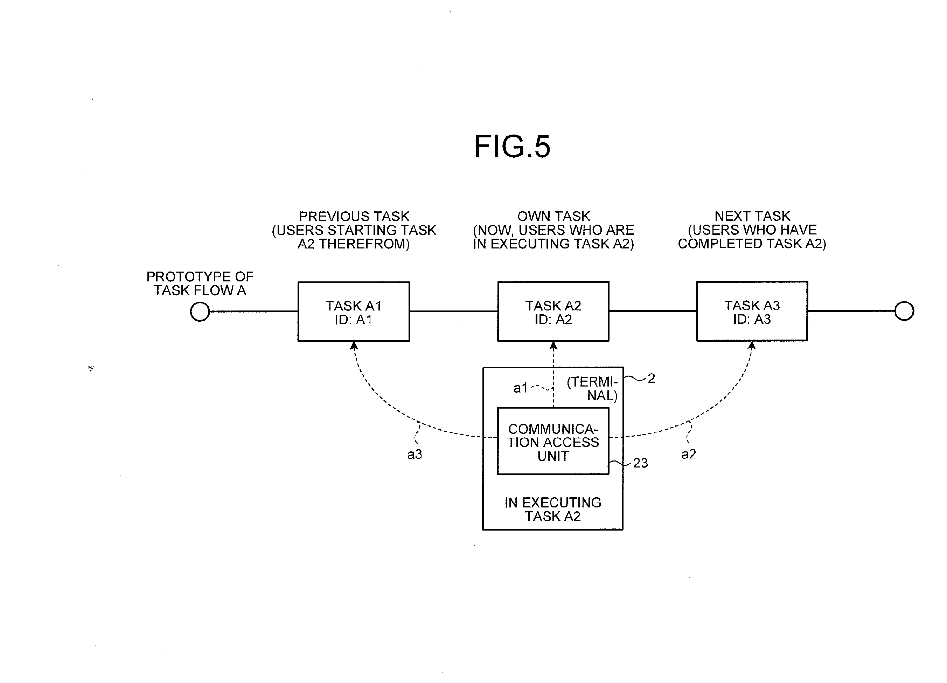

Here, an example of the process of the communication access unit 23 will be described with reference to FIG. 5. FIG. 5 is a diagram that illustrates an example of the process of the communication access unit according to the first embodiment. As illustrated in FIG. 5, a task flow A is defined in the execution sequence of a task A1, a task A2, and a task A3. Here, "A1", "A2", and "A3" are prototype IDs of tasks. A user using the user interface device 2 is currently in executing the task A2.

For example, the user using the user interface device 2 desires to exchange knowhow of the task A2. Then, the communication access unit 23 transmits a communication start request including a user list in which the user who is actually in executing the task A2 is set and the task A2 to the task execution support device 1 (a1).

For another example, a user using the user interface device 2 is assumed to desire to receive teaching of knowhow of the task A2. Then, the communication access unit 23 transmits a communication start request including a user list in which users who have completed the task A2 and users who are in executing a next task A3 of the task A2 are set and the task A2 to the task execution support device 1 (a2).

For another example, a user using the user interface device 2 is assumed to desire to teach knowhow of the task A2. Then, the communication access unit 23 transmits a communication start request including a user list in which users starting the task A2 from now and users who are in executing the previous task A1 of the task A2 are set and the task A2 to the task execution support device 1 (a3).

In this way, the communication access unit 23 can change a user to be communicated with based on the purpose of the user who has requested the support, and accordingly, the task support can be smoothed.

### Flowchart of Communication Target Determination Process

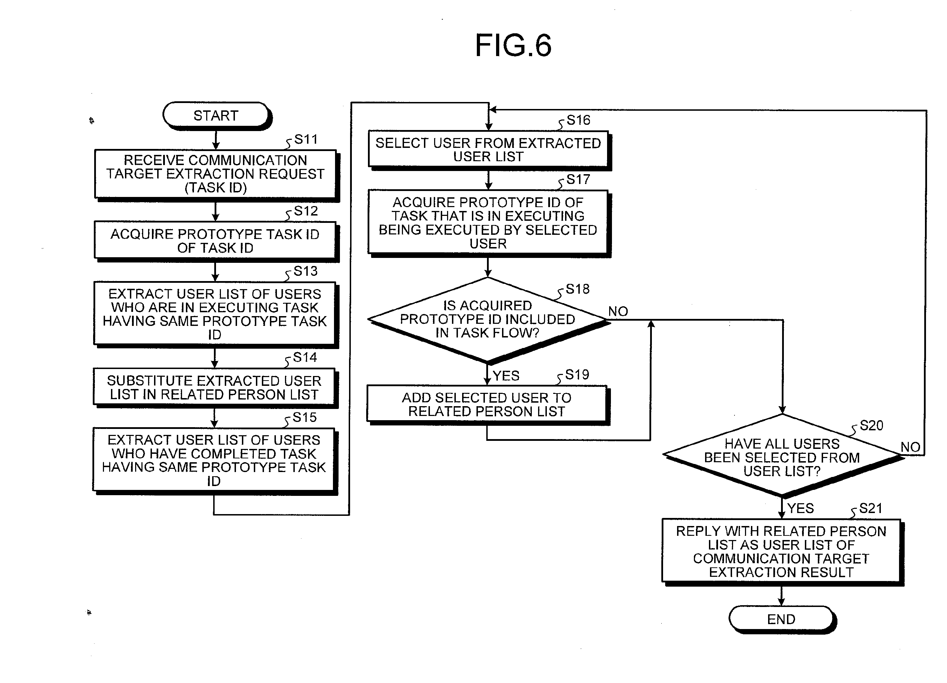

Next, the process sequence of a communication target determination process according to the first embodiment will be described with reference to FIG. 6. FIG. 6 is a diagram that illustrates an example of a flowchart of the communication target determination process according to the first embodiment.

As illustrated in FIG. 6, the communication target determining unit 15 receives a communication target extraction request including a task ID from the user interface device 2 (step S11). In other words, the communication target determining unit 15 receives a task execution support request for a task represented by the task ID from the user interface device 2.

Then, the communication target determining unit 15 acquires a prototype task ID of the received task ID (step S12). For example, in a case where the received task ID is a task X-A2, the communication target determining unit 15 acquires a task A2 from the task X-A2 as the prototype task ID.

The communication target determining unit 15 extracts a user list of users who are in executing a task having the same prototype task ID (step S13). For example, the communication target determining unit 15 extracts a list of persons 112b in charge of tasks whose task state 112e corresponding to a task ID 112a representing the same prototype task ID as the extracted prototype task ID is "in executing" from the task execution state accumulating unit 112. Then, the communication target determining unit 15 substitutes the extracted user list in a related person list (step S14). In other words, the communication target determining unit 15 selects users whose task state of the task that is the support target is actually "in executing" as communication targets.

The communication target determining unit 15 extracts a user list of users who have completed the task having the same prototype task ID (step S15). For example, the communication target determining unit 15 extracts a list of persons 112b in charge of tasks whose task state 112e corresponding to the task ID 112a representing the same prototype task ID as the extracted prototype task ID is "completed" from the task execution state accumulating unit 112.

Subsequently, the communication target determining unit 15 selects a user from the extracted user list (step S16). The communication target determining unit 15 acquires a prototype ID of a task that is in executing being executed by the selected user (step S17). For example, in a case where the task ID of the task that is in executing being executed by the user is a task Y-A3, the communication target determining unit 15 acquires a task A3 from the task Y-A3 as the prototype task ID.

Subsequently, the communication target determining unit 15 determines whether or not the acquired prototype ID is included in a task flow including the task (step S18). In a case where the acquired prototype ID is determined to be included in the task flow including the task (step S18: Yes), the communication target determining unit 15 adds the selected user to the related person list (step S19). In other words, the communication target determining unit 15 selects users whose task state of the task that is the support target is "completed" and users who are actually executing a task on the same task flow. Then, the communication target determining unit 15 proceeds to step S20.

On the other hand, in a case where the acquired prototype ID is determined not to be included in the task flow including the task (step S18: No), the communication target determining unit 15 proceeds to step S20. In other words, the communication target determining unit 15 excludes user actually executing a task on a different task flow from communication targets.

In step S20, the communication target determining unit 15 determines whether or not all the users have been selected from the user list (step S20). In a case where all the users are determined not to have been selected from the user list (step S20: No), the communication target determining unit 15 proceeds to step S16 for selecting a next user.

On the other hand, in a case where all the users are determined to have been selected from the user list (step S20: Yes), the communication target determining unit 15 performs the following process. The communication target determining unit 15 replies to the user interface device 2 of the request source with the related person list as a user list that is a result of the extraction of communication targets (step S21). Then, the communication target determining unit 15 ends the communication target determination process.

### Specific Example of Communication Determination Process

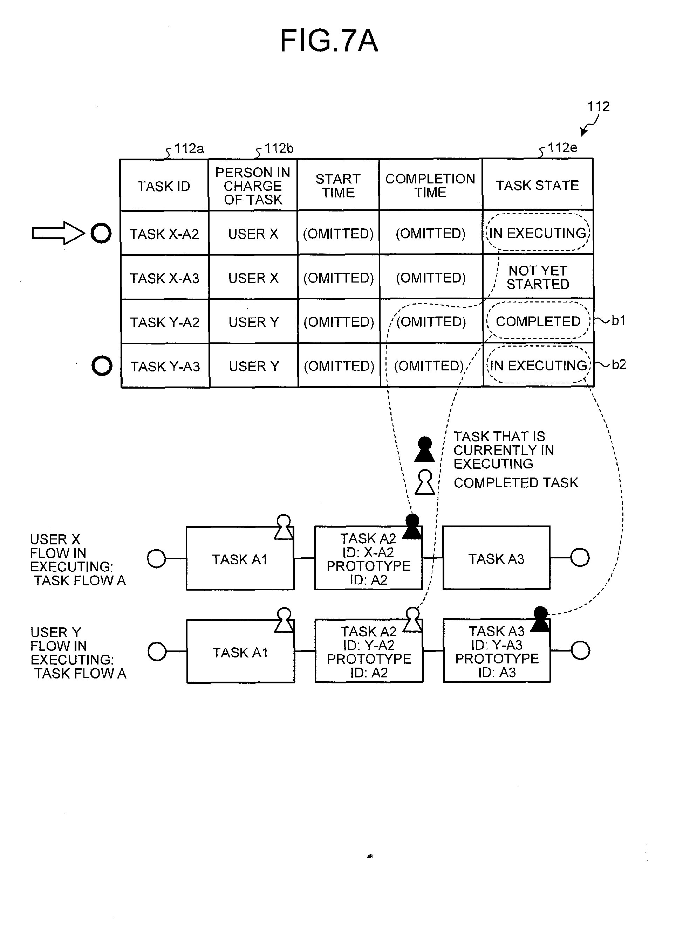

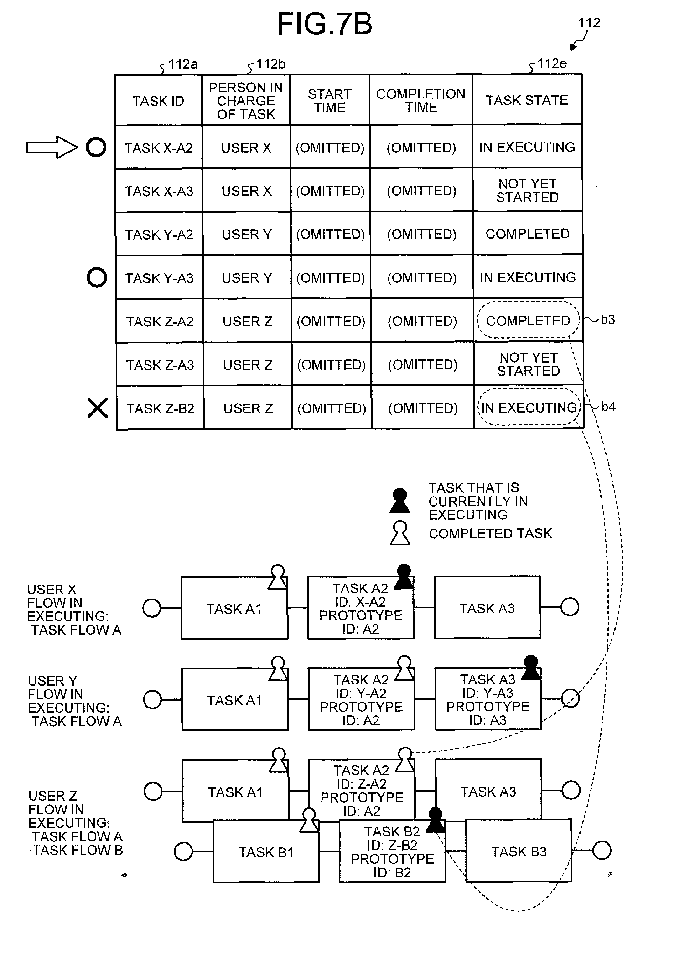

Next, specific examples of a communication determination process according to the first embodiment will be described with reference to FIGS. 7A and 7B. FIGS. 7A and 7B are diagrams that illustrate specific examples of the communication determination process according to the first embodiment. In FIGS. 7A and 7B, a user interface device 2 is described as a terminal device.

As illustrated in FIG. 7A, in a case where a user X and a user Y execute a task flow A, the task state receiving unit 14 receives a task execution state and accumulates the received task execution state in the task execution state accumulating unit 112. Here, a task flow A is assumed to be defined in the execution sequence of a task A1 (ordering specification review), a task A2 (ordering content input), a task A3 (ordering content checking), and a task A4 (approval request). In addition, "A1", "A2", "A3", and "A4" represent prototype identifications (ID) of tasks.

The user X is currently "in executing" of a task X-A2 as a task ID 112a. The user Y has "completed" a task Y-A2 as a task ID 112a and is currently "in executing" of a task Y-A3. When a terminal device 2 of the user X executes the task X-A2, a task execution support request of the task X-A2 is assumed to be transmitted to the task execution support device 1.

Then, the communication target determining unit 15 extracts a list of persons 112b in charge of tasks whose task state 112e of the task ID 112a including the prototype task ID "A2" of the support-requested task X-A2 is "in executing" from the task execution state accumulating unit 112. Here, there is no such a list.

Then, the communication target determining unit 15 extracts a list of persons 112b in charge of tasks whose task state 112e of the task ID 112a including the prototype task ID "A2" of the support-requested task X-A2 is "completed" from the task execution state accumulating unit 112. Here, based on a record denoted by a reference sign b1, the "user Y" is extracted as the person 112b in charge of tasks.

Then, the communication target determining unit 15 acquires a prototype ID of a task that is in executing being executed by the user Y. Here, based on a record denoted by a reference sign b2, "A3" is acquired as a prototype ID of the task that is in executing being executed by the user Y.

Subsequently, the communication target determining unit 15 determines whether or not the acquired prototype ID "A3" is included in the task flow A. Here, the acquired prototype ID "A3" and the prototype task ID "A2" of the support-requested task X-A2 are included in the same task flow A.

As a result, the communication target determining unit 15 determines the user X (a person who has requested the support) and the user Y as communication targets and transmits a user list including the user X and the user Y to the terminal 2 of the user X who is a request source. In this way, the user X, by performing communication with the user Y, can obtain the knowhow of the task A2 (ordering content input).

As illustrated in FIG. 7B, in addition to the status illustrated in FIG. 7A, a user Z "completes" a task Z-A2 as a task ID 112a and is "in executing" of a task Z-B2 as a task ID 112a and is "in executing" of a task Z-B2 within a task flow B other than the current task flow A.

Then, the communication target determining unit 15 extracts a list of a person 112b in charge of a task whose task state 112e of the task ID 112a including the prototype task ID "A2" of the support-requested task X-A2 is "in executing" from the task execution state accumulating unit 112. Here, there is no such a list.

Then, the communication target determining unit 15 extracts a list of a person 112b in charge of a task whose task state 112e of the task ID 112a including the prototype task ID "A2" of the support-requested task X-A2 is "completed" from the task execution state accumulating unit 112. Here, based on a record denoted by a reference sign b3, a "user Z" is extracted as the person 112b in charge of the task.

Then, the communication target determining unit 15 acquires a prototype ID of a task that is in executing being executed by the user Z. Here, based on a record denoted by a reference sign b4, "B2" is acquired as the prototype ID of the task that is in executing being executed by the user Z.

Subsequently, the communication target determining unit 15 determines whether or not the acquired prototype ID "B2" is included in the task flow A. Here, the acquired prototype ID "B2" and the prototype task ID "A2" of the support-requested task X-A2 are different task flows. In other words, the task flow of the support-requested task X-A2 is the task flow A, and the task flow of the acquired prototype ID "B2" is the task flow B, and the task flows are mutually-different task flows.

As a result, the communication target determining unit 15 determines the user X (the person who has requested the support) and the user Y as communication targets and excludes the user Z from the communication targets. In other words, since the user Z is in executing the task B2 of the task flow B different from the task flow A of the task A2 that is requested to be supported from the user X, the user Z is excluded from the communication targets. Then, the communication target determining unit 15 transmits a user list including the user X and the user Y to the terminal 2 of the user X that is the request source. Accordingly, the user X communicates with the user Y, thereby acquiring the knowhow of the task A2 (ordering content input).

### Sequence of Task Execution Support Process

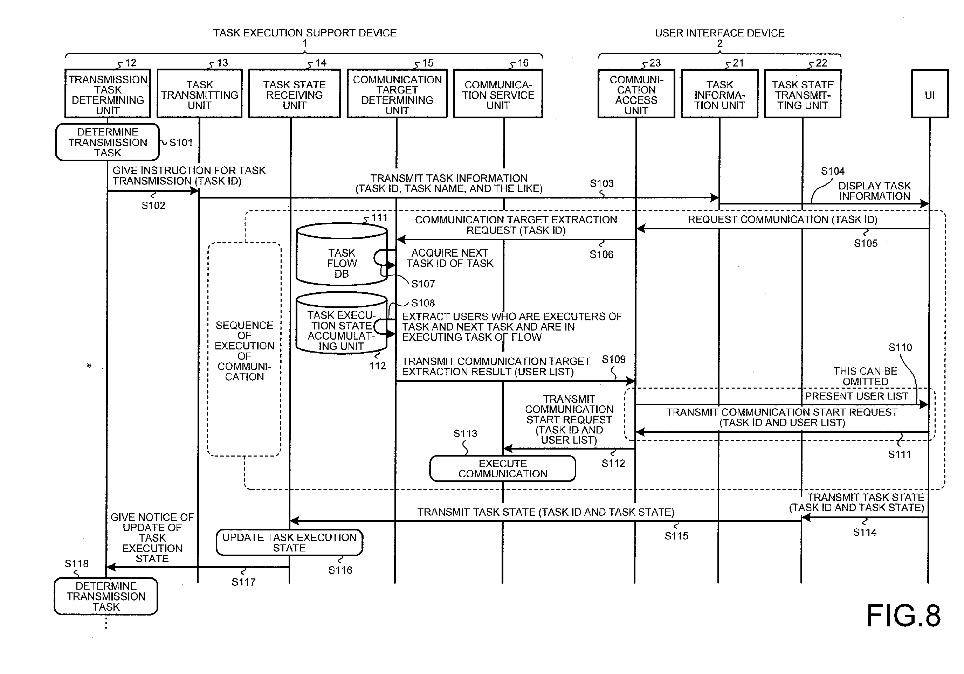

Next, an example of the sequence of a task execution support process according to the first embodiment will be described with reference to FIG. 8. FIG. 8 is a diagram that illustrates an example of the sequence of the task execution support process according to the first embodiment.

As illustrated in FIG. 8, in the task execution support device 1, the transmission task determining unit 12 determines a task to be transmitted to the user interface device 2 (S101) and instructs the task transmitting unit 13 to transmit a task including the task ID of the determined task (S102). The task transmitting unit 13 receives the instruction and transmits task information including the task ID and a task name to the user interface device 2 (S103).

In the user interface device 2, the task information unit 21 displays the received task information on the UI (S104). The communication access unit 23 that has received the communication request including the task ID from the UI transmits a communication target extraction request including the task ID to the task execution support device 1 (S105 and S106). In other words, the communication access unit 23 transmits a task execution support request of the task ID to the task execution support device 1.

In the task execution support device 1, the communication target determining unit 15 that has received a communication target extraction request including the task ID acquires a task ID of a next task of the task represented by the task ID by referring to the task flow DB 111 (S107). The communication target determining unit 15 extracts users who are executers of the task and the next task and are in executing tasks of the task flow by referring to the task execution state accumulating unit 112 (S108). Then, the communication target determining unit 15 transmits a result (user list) of the communication target extraction to the user interface device 2 of the request source (S109).

In the user interface device 2, the communication access unit 23 presents the user list received by the communication access unit 23 from the task execution support device 1 to the UI (S110). The communication access unit 23 that has received the communication start request including a task ID and the user list from the UI transmits a communication start request including the task ID and the user list to the task execution support device 1 (S111 and S112). Here, S110 and S111 may be omitted. The communication access unit 23 may transmit a communication start request including the user list received from the task execution support device 1 as it is to the task execution support device 1.

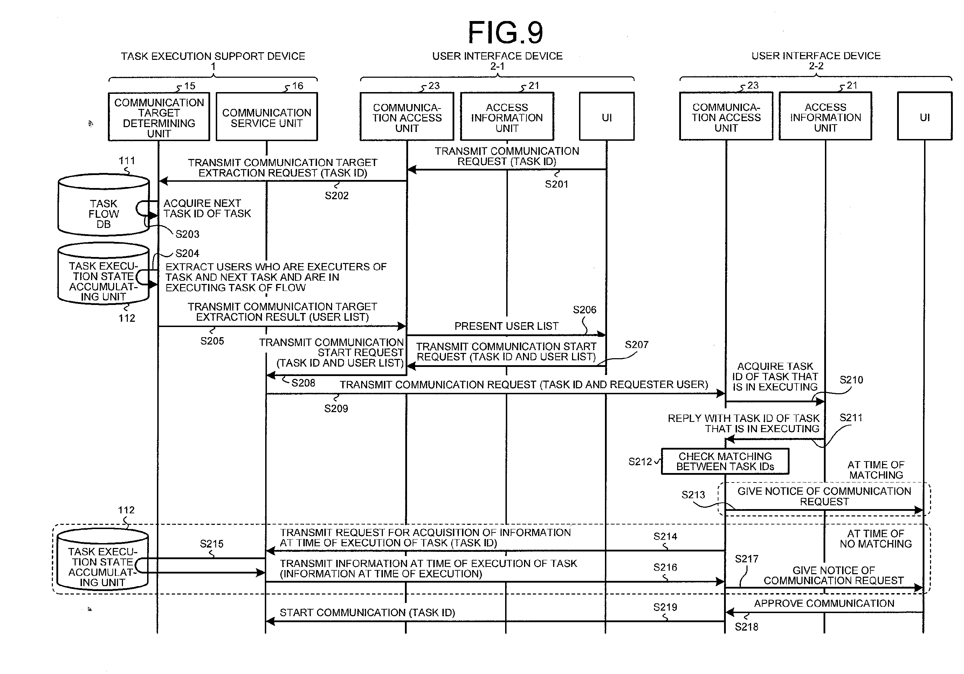

In the task execution support device 1, the communication service unit 16 that has received a communication start request including the user list causes communication to be performed (S113). In other words, the task execution support device 1 causes communication between the user interface device 2 of the user included in the user list and the user interface device 2 that has requested to start communication. Accordingly, the task execution support device 1 can smooth the support of the task executed by the user interface device 2 that has requested to start communication. The sequence of S105 to S113 will be described in detail with reference to FIG. 9.

Thereafter, in the user interface device 2, the UI transmits the task state of the task ID (S114). The task state transmitting unit 22 that has received the task state of the task ID transmits the task ID and the task state to the task execution support device 1 (S115).

In the task execution support device 1, in a case where the task ID and the task state are received, the task state receiving unit 14 updates the task execution state of the task ID (S116). In other words, the task state receiving unit 14 updates the task state 112e corresponding to the task ID 112a, which is stored in the task execution state accumulating unit 112, matching the received task ID with the received task state.

The task state receiving unit 14 gives notice of the update of the task execution state (S117). The transmission task determining unit 12 that has received the notification continuously determines a task to be transmitted to the user interface device 2 (S118).

### Sequence of Execution of Communication

Next, an example of the sequence of execution of communication according to the first embodiment will be described with reference to FIG. 9. FIG. 9 is a diagram that illustrates an example of the sequence of execution of the communication according to the first embodiment.

As illustrated in FIG. 9, in a user interface device 2-1, a communication access unit 23 that has received a communication request including a task ID from a UI transmits a communication target extraction request including a task ID to a task execution support device 1 (S201 and S202). In other words, a communication access unit 23 of the user interface device 2-1 transmits a task execution support request of a task ID to the task execution support device 1.

In the task execution support device 1, a communication target determining unit 15 that has received a communication target extraction request including a task ID acquires a task ID of a next task of the task represented by the task ID by referring to a task flow DB 111 (S203). The communication target determining unit 15 extracts users who are executers of the task and the next task and are in executing tasks of the task flow by referring to the task execution state accumulating unit 112 (S204). Then, the communication target determining unit 15 transmits a result (user list) of the communication target extraction to a user interface device 2-1 of the request source (S205).

In the user interface device 2-1, the communication access unit 23 presents the user list received by the communication access unit 23 from the task execution support device 1 to the UI (S206). The communication access unit 23 that has received the communication start request including a task ID and the user list from the UI transmits a communication start request including the task ID and the user list to the task execution support device 1 (S207 and S208). Here, S206 and S207 may be omitted. The communication access unit 23 may transmit a communication start request including the user list received from the task execution support device 1 as it is to the task execution support device 1.

In the task execution support device 1, the communication service unit 16 that has received a communication start request transmits a communication request including a requester user and a task ID to a user interface device 2-2 (S209). The user interface device 2-2 is a device of a user included in the user list included in the start request.

In the user interface device 2-2, the communication access unit 23 that has received a communication request acquires a task ID of a task that is currently executed through the task information unit 21 (S210 and S211). Then, the communication access unit 23 checks the matching between task IDs (S212). In other words, the communication access unit 23 determines whether or not the acquired task ID and the task ID included in the communication request match each other. Here, when the task IDs match each other, the communication access unit 23 notifies the UI of the communication request (S213), and the process proceeds to S218. On the other hand, when the task IDs do not match each other, the communication access unit 23 transmits a request for acquisition of the information at the time of execution of a task including a task ID to the task execution support device 1 (S214).

In the task execution support device 1, the communication service unit 16 that has received the request for acquisition of the information at the time of execution of a task acquires the information at the time of execution of a task having the task ID for a user using the user interface device 2-2 by referring to the task execution state accumulating unit 112 (S215). The communication service unit 16 transmits the information at the time of execution of a task having the task ID to the user interface device 2-2 (S216).

In the user interface device 2-2, the communication access unit 23 that has received the information at the time of execution of the task having the task ID notifies the UI of a communication request (S217), and the process proceeds to S218. In S218, the communication access unit 23 that has received a permission for the communication from the UI transmits an indication of starting the communication including the task ID to the task execution support device 1 (S219).

As a result, the task execution support device 1 causes communication between the user interface device 2-1 from which the communication start request has been received and the user interface device 2-2 of the user included in the user list to be started.

### Effect of First Embodiment

In this way, according to the first embodiment described above, the task execution support device 1 generates a first task flow relating to a plurality of tasks based on the execution sequence of a plurality of tasks defined in a plurality of pieces of task information and manages the execution status of the generated first task flow. In a case where a task execution support request is received in the management of the first task flow, the task execution support device 1 specifies a task flow group relating to the first task flow based on the received support request. The task execution support device 1 gets the execution statuses of task flows of the specified task flow group. The task execution support device 1 extracts executers who can respond to the support request from among executers of the task flows based on the obtained execution statuses of the task flows and starts communication between the extracted executers and an executer of the first task flow. According to such a configuration, by extracting executers who can respond to the support request based on the execution statuses of the task flow group relating to the first task flow requiring the support, the task execution support device 1 can smooth the support for the task of the first task flow.

In addition, according to the first embodiment described above, the task execution support device 1 excludes executers having disturbances in the execution of tasks that are actually in executing from among executers who have completed the execution of task requesting the support among the executers of the task flows based on the determined execution statuses of the task flows. According to such a configuration, the task execution support device 1, on the supporter side, excludes executers having disturbances in the execution of tasks that are actually in executing from supporters, the support for the task in consideration of the supporter side can be smoothed.

Furthermore, according to the first embodiment described above, the task execution support device 1 excludes executers actually executing tasks of a task flow not relating to the first task flow. According to such a configuration, the task execution support device 1 excludes executers who executed tasks of a task flow relating to the first task flow in the past but are currently executing tasks of a task flow not relating to the first task flow, thereby the support for a task in consideration of the supporter side can be smoothed. In other words, the task execution support device 1 excludes executers who need to switch the ways of thinking of the supporter side from a task flow that is currently executed to the first task flow requiring the support, thereby the support for a task can be executed without having an adverse effect on the execution of a task on the supporter side.

### [b] Second Embodiment

However, the task execution support device 1 according to the first embodiment, when targets for communication with a user who has requested the support for task execution are determined, extracts users who are currently executing a task that is the support target and users who executed the task in the past as communication targets. Then, the task execution support device 1 excludes users who are executing tasks of task flows not relating to a task flow including the task that is currently the support target among the users who executed the task in the past from the communication targets. However, the task execution support device 1 is not limited thereto but, the users excluded from the communication targets may be users who do not have fresh knowhow.

Thus, a task execution support device 1 according to a second embodiment, when targets for communication with a user who has requested the support for task execution are determined, extracts users who are currently executing a task that is the support target and users who executed the task in the past as the communication targets. The task execution support device 1 excludes users executing tasks of task flows not relating to a task flow including the task that is currently the support target among the users who executed the task in the past from the communication targets. A case will be described in which the task execution support device 1 additionally excludes users who do not have fresh knowhow from the communication targets.

### Configuration of Task Execution Support System according to Second Embodiment

A task execution support system 9 according to the second embodiment has the same configuration as the task execution support system 9 illustrated in FIG. 1, and thus, description of the configuration will not be presented. A difference between the first embodiment and the second embodiment is in the operation executed by a communication target determining unit 15.

In a case where a task execution support request is received from the user interface device 2, the communication target determining unit 15 specifies a task flow group that is the same as a task flow including a task that is the support target based on the received support request.

In addition, the communication target determining unit 15 gets the execution status of each task flow of the specified task flow group and determines executers who can respond to the support request among executers of the task flow group based on the obtained execution status of each task flow. For example, the communication target determining unit 15 gets an execution status of the task that is the support target included in each task flow of the specified task flow group based on the task execution state accumulating unit 112. The communication target determining unit 15 selects users whose execution status of the task that is the support target included in the task flow is currently in executing. The communication target determining unit 15 selects users executing tasks on the actually same task flow from among users whose execution status of the task that is the support target included in the task flow is execution-completed. In other words, the communication target determining unit 15 excludes users executing tasks on actually different task flows from communication targets.

In addition, the communication target determining unit 15 excludes users who do not have fresh knowhow among users executing tasks on the actually same task flow from the communication targets. For example, the communication target determining unit 15 excludes users executing tasks that are separate from the task that is the support target by n tasks or more among the users executing tasks on the actually same task flow from the communication targets. The reason for this is that a user executing a task that is separate from the task that is the support target by n tasks or more is assumed not to have fresh knowhow of the task that is the support target. For another example, the communication target determining unit 15 excludes users who are in executing executing tasks that are separate from the task that is the support target by n periods or more among the users executing tasks on the actually same task flow from the communication targets. The reason for this is that a user executing a task separate from the task that is the support target by n periods or more is assumed not to have fresh knowhow of the task that is the support target.

In addition, the communication target determining unit 15 determines selected users as targets for communication with the user who has requested the support. Then, the communication target determining unit 15 transmits a user list of the determined communication targets to the user interface device 2 that has requested the support.

### Flowchart of Communication Target Determination Process

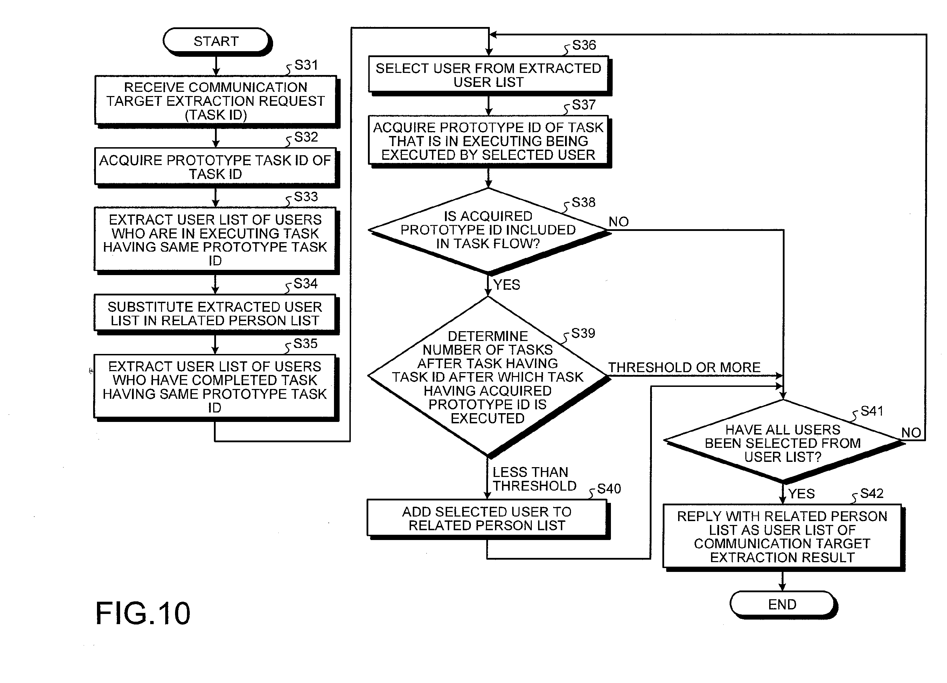

Next, the process sequence of a communication target determination process according to the second embodiment will be described with reference to FIG. 10. FIG. 10 is a diagram that illustrates an example of a flowchart of the communication target determination process according to the second embodiment. A difference between the first embodiment and the second embodiment is in that S39 is added. Steps other than S39 are the same operations, and thus, description thereof will be simplified. S11 to S18 of the first embodiment correspond to S31 to S38 of the second embodiment. S19 to S21 of the first embodiment correspond to S40 to S42 of the second embodiment.

As illustrated in FIG. 10, the communication target determining unit 15 receives a communication target extraction request including a task ID from the user interface device 2 (step S31). Then, the communication target determining unit 15 acquires a prototype task ID of the received task ID (step S32).

The communication target determining unit 15 extracts a user list of users who are in executing a task having the same prototype task ID (step S33). Then, the communication target determining unit 15 substitutes the extracted user list in a related person list (step S34). In other words, the communication target determining unit 15 selects users whose task state of the task that is the support target is actually "in executing" as communication targets.

The communication target determining unit 15 extracts a user list of users who have completed the task having the same prototype task ID (step S35).

Subsequently, the communication target determining unit 15 selects a user from the extracted user list (step S36). The communication target determining unit 15 acquires a prototype ID of a task that is in executing being executed by the selected user (step S37).

Subsequently, the communication target determining unit 15 determines whether or not the acquired prototype ID is included in a task flow including the task (step S38). In a case where the acquired prototype ID is determined not to be included in the task flow including the task (step S38: No), the communication target determining unit 15 proceeds to step S41. In other words, the communication target determining unit 15 excludes users actually executing a task on an actually different task flow from communication targets.

On the other hand, in a case where the acquired prototype ID is determined to be included in the task flow including the task (step S38: Yes), the communication target determining unit 15 executes the following process. The communication target determining unit 15 determines the number of tasks after the task having the task ID after which the task having the acquired prototype ID is executed (step S39). For example, in a case where a threshold is the number of tasks from the task having the task ID, the communication target determining unit 15 determines whether or not a task that is in executing is a task separate from the task having the task ID by n tasks or more.

In a case where the task having the acquired prototype ID is determined to be a task executed after the threshold or more of the task ID (step S39: threshold or more), the communication target determining unit 15 proceeds to step S41. For example, in a case where the threshold is the number of tasks after the task having the task ID, the communication target determining unit 15 executes the following process. In other words, the communication target determining unit 15 excludes users who are in executing executing tasks that are separate by n or more tasks from the task having the task ID from the communication target as users not having fresh knowhow.

On the other hand, in a case where the task having the acquired prototype ID is determined not to be a task executed after the threshold or more after the task having the task ID (step S39: less than threshold), the communication target determining unit 15 adds the selected users to the related person list (step S40). In other words, the communication target determining unit 15 adds users having fresh knowhow among users whose task state of the task that is the support target is "completed" and users who are executing tasks on the actually same task flow. Then, the communication target determining unit 15 proceeds to step S41.

In step S41, the communication target determining unit 15 determines whether or not all the users have been selected from the user list (step S41). In a case where all the users are determined not to have been selected from the user list (step S41: No), the communication target determining unit 15 proceeds to step S36 for selecting a next user.

On the other hand, in a case where all the users are determined to have been selected from the user list (step S41: Yes), the communication target determining unit 15 performs the following process. The communication target determining unit 15 replies to the user interface device 2 of the request source with the related person list as a user list that is a result of the extraction of communication targets (step S42). Then, the communication target determining unit 15 ends the communication target determination process.

### Specific Example of Communication Determination Process according to Second Embodiment

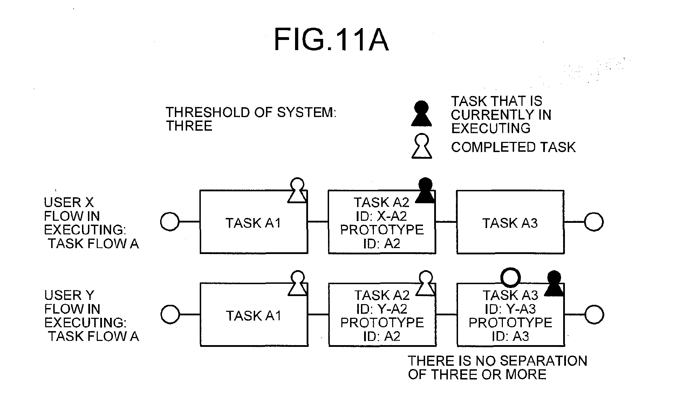

Next, specific examples of a communication determination process according to the second embodiment will be described with reference to FIGS. 11A to 11C. FIGS. 11A to 11C are diagrams that illustrate specific examples of the communication determination process according to the second embodiment. In FIGS. 11A to 11C, a user interface device 2 is described as a terminal device.

In the example illustrated in FIG. 11A, a case will be described in which the threshold is the number (here, for example, "three") of tasks after a task having the task ID. As illustrated in FIG. 11A, in a case where a user X and a user Y execute a task flow A, the task state receiving unit 14 receives a task execution state and accumulates the received task execution state in the task execution state accumulating unit 112. Here, the task flow A is assumed to be defined in the execution sequence of a task A1 (ordering specification review), a task A2 (ordering content input), a task A3 (ordering content checking), and a task A4 (approval request). In addition, "A1", "A2", "A3", and "A4" represent prototype IDs of tasks.

The user X is currently "in executing" of a task X-A2 as a task ID 112a. The user Y has "completed" a task Y-A2 as a task ID 112a and is currently "in executing" of a task Y-A3. When a terminal device 2 of the user X executes the task X-A2, a task execution support request of the task X-A2 is assumed to be transmitted to the task execution support device 1.

Then, the communication target determining unit 15 extracts a list of persons 112b in charge of tasks whose task state 112e of the task ID 112a including the prototype task ID "A2" of the support-requested task X-A2 is "in executing" from the task execution state accumulating unit 112. Here, there is no such a list.

Then, the communication target determining unit 15 extracts a list of persons 112b in charge of tasks whose task state 112e of the task ID 112a including the prototype task ID "A2" of the support-requested task X-A2 is "completed" from the task execution state accumulating unit 112. Here, since the user Y completes the task A2, the "user Y" is extracted as the person 112b in charge of the task.

Then, the communication target determining unit 15 acquires a prototype ID of a task that is in executing being executed by the user Y. Here, since the user Y is currently in executing the task A3, "A3" is acquired as a prototype ID of the task that is in executing being executed by the user Y.

Subsequently, the communication target determining unit 15 determines whether or not the acquired prototype ID "A3" is included in the task flow A. Here, the acquired prototype ID "A3" and the prototype task ID "A2" of the support-requested task X-A2 are included in the same task flow A.

In addition, the communication target determining unit 15 determines whether or not the task having the acquired prototype ID "A3" is a task separate from the support-requested task A2 by a threshold or more. Here, the task A3 is not separate from the task A2 by "three" tasks or more set as the threshold. As a result, the communication target determining unit 15 determines the user X (a person who has requested the support) and the user Y as communication targets and transmits a user list including the user X and the user Y to the terminal 2 of the user X who is a request source. In this way, the user X, by performing communication with the user Y, can obtain fresh knowhow of the task A2 (ordering content input).

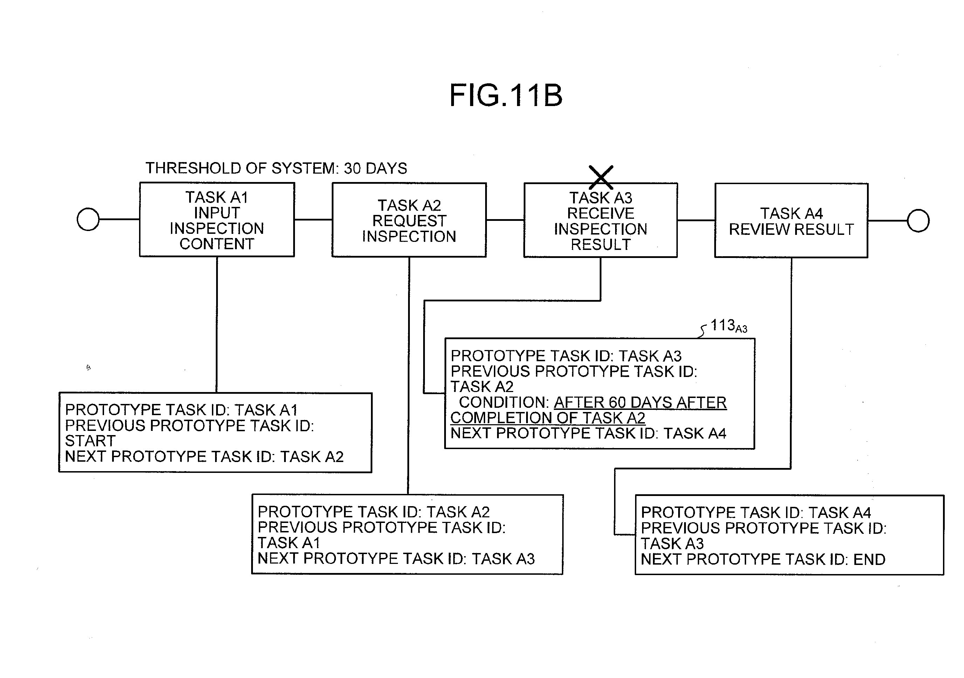

In the example illustrated in FIG. 11B, a case will be described in which the threshold is a period (here, for example, "30 days") after the execution of the task having the task ID. As illustrated in FIG. 11B, in task information 113_{A3} of a task A3, "task A3" as a prototype task ID, "task A2" as a previous prototype task ID, and "task A4" as a next prototype task ID are set. As an execution condition for the task A3, "60 days after the completion of the task A2" is set.

Here, a terminal device 2 of a specific user is assumed to transmit a task execution support request of the task A2 to the task execution support device 1 at the time of execution of the task A2. Another user is assumed to be in executing the task A3. The task A3 is a task that is executed after 60 days after the completion of the task A2 based on the task information 113_{A3}. Thus, the communication target determining unit 15 determines that the task A3 is a task separate from the support-requested task A2 by the threshold (30 days) or more. The reason for this is that the task A3 is a task of which the execution can be started after 60 days after the completion of the task A2. Then, the communication target determining unit 15 excludes a user who is in executing the task A3 from the communication targets as a user who does not have fresh knowhow.

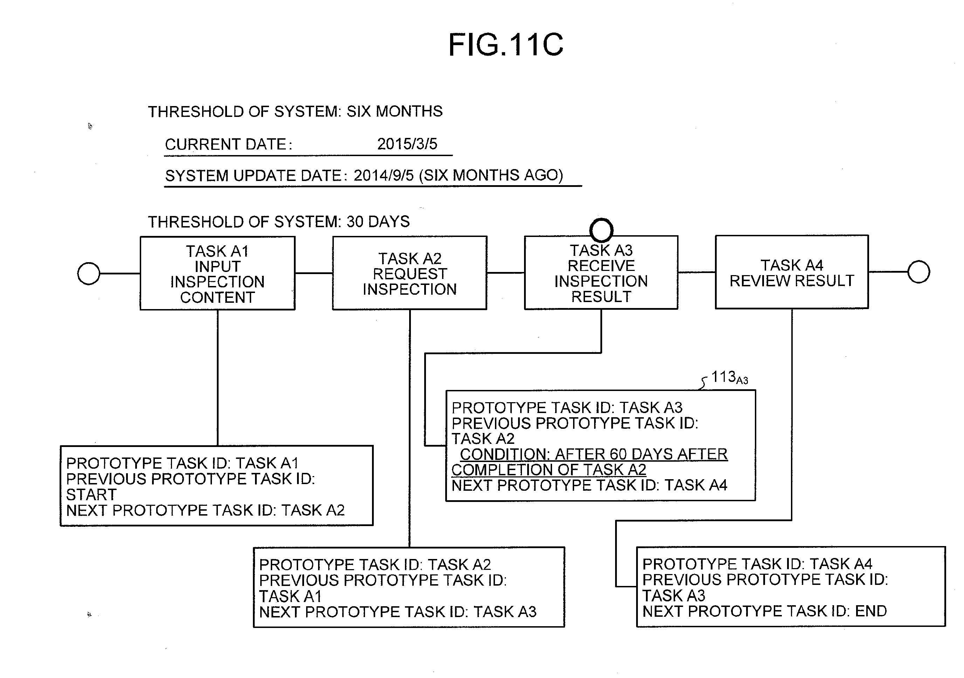

The threshold is not limited to information of the inside of the system but may be information of the outside of the system. In the example illustrated in FIG. 11C, a case will be described in which the threshold is an elapsed date and time (here, for example, "six months") after update date (here, for example, "2014/9/5") of the system. The task flow and the task information are the same as those illustrated in FIG. 11B.

Here, it is assumed that a terminal device 2 of a certain user transmits a task execution support request of the task A2 to the task execution support device 1 when the task A2 is executed. Another user is assumed to be in executing the task A3 on the current date "2015/3/5". Then, the communication target determining unit 15 determines that the execution date "2015/3/5" of the task A3 does not exceed the threshold (six months) from the system update date "2014/9/5". Thus, the communication target determining unit 15 does not exclude the user who is in executing the task A3 from the communication targets. The reason for this is that this user executes the task within six months after the system update and thus is assumed to be a user who has fresh knowhow of the system after the update. In other words, while the task A3 is a task separate from the support-requested task A2 by 30 days or more, the threshold of six months as an elapsed time from the system update date is not exceeded, and the user who is in executing the task A3 is not excluded from the communication targets.

As a result, the communication target determining unit 15 determines the user (the person himself) who has requested the support and the user who is in executing the task A3 to be the communication targets. In this way, the support-requested user can obtain fresh knowhow of the task A2 (ordering content input) by executing communication with the user who is in executing the task A3.

### Effect of Second Embodiment

In this way, according to the second embodiment described above, the task execution support device 1 generates a first task flow relating to a plurality of tasks based on the execution sequence of a plurality of tasks defined in a plurality of pieces of task information and manages the execution status of the generated first task flow. In a case where a task execution support request is received in the management of the first task flow, the task execution support device 1 specifies a task flow group relating to the first task flow based on the received support request. The task execution support device 1 gets the execution statuses of task flows of the specified task flow group. The task execution support device 1, based on the obtained execution statuses of the task flows, excludes executers who are executers who have completed the execution of the support-requested task and are not within a predetermined condition range in the relation between the task that is actually executed and the support-requested task among the executers of the task flows. According to such a configuration, the task execution support device 1, by excluding executers who are not within the predetermined condition range in the relation between the task that is actually in executing and the support-requested task from supporters, can smooth the task support.

In addition, according to the second embodiment described above, the task execution support device 1 excludes executers who are actually in executing tasks separate from the support-requested task by a predetermined number of tasks as executers who are not within the predetermined condition range in the relation between the task that is actually in executing and the support-requested task. According to such a configuration, the task execution support device 1, by excluding executers who are actually in executing tasks separated from the support-requested task by a predetermined number of tasks, can exclude executers assumed not to have fresh knowhow. As a result, the task execution support device 1 can smooth the task support.

Furthermore, according to the second embodiment, the task execution support device 1 excludes executers who are actually in executing tasks exceeding a predetermined period after the support-requested task. According to such a configuration, the task execution support device 1, by excluding executers who are actually in executing tasks exceeding the predetermined period after the support-requested task, can exclude executers assumed not to have fresh knowhow. As a result, the task execution support device 1 can smooth the task support.

### [c] Third Embodiment

Meanwhile, when targets for communication with a user who has requested the support for the task execution are determined, the task execution support device 1 according to the first embodiment extracts users who are currently in executing the task that is the support target or users who executed the task in the past as the communication targets. Then, the task execution support device 1 has been described to exclude users who are in executing tasks of task flows not relating to the task flow including the task that is the current support target among the users who executed the task in the past from the communication targets. In addition, the task execution support device 1 according to the second embodiment has been described to exclude users who do not have fresh knowhow from the communication targets. However, the task execution support device 1 is not limited thereto, but busy users may be excluded from the communication targets.

Thus, when targets for communication with the user who has requested the support for the task execution are determined, a task execution support device 1 according to the third embodiment extracts users who are currently in executing the task that is the support target or users who executed the task in the past as communication targets. The task execution support device 1 excludes users who are in executing tasks of task flows not relating to the task flow including the task that is the current support target among the users who executed the task in the past from the communication targets. A case will be described in which the task execution support device 1 additionally excludes busy users from the communication targets.

### Configuration of Task Execution Support System according to Third Embodiment

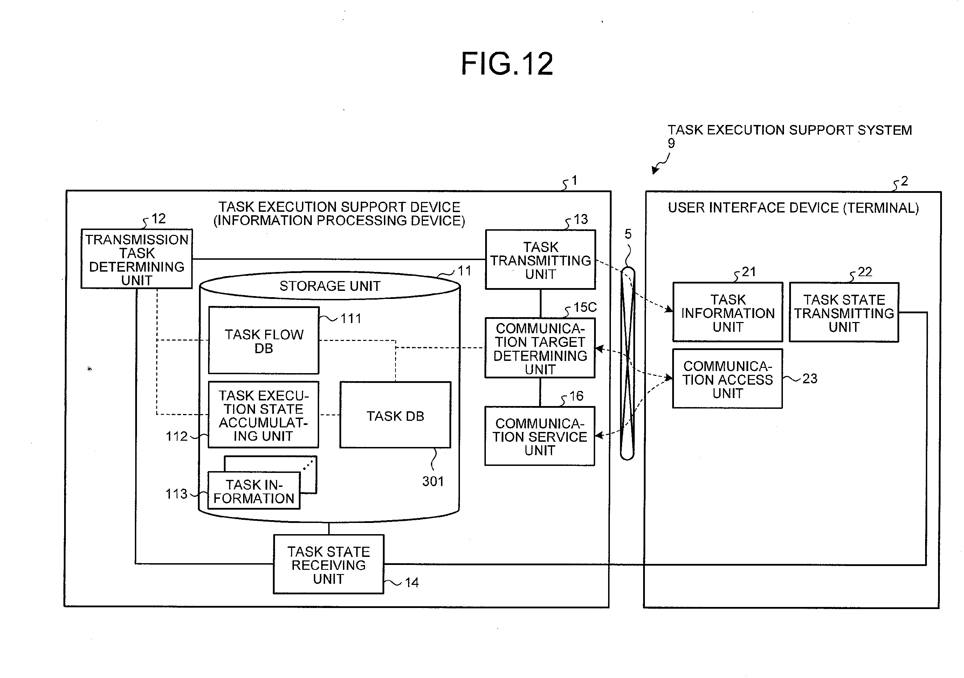

FIG. 12 is a diagram that illustrates the configuration of a system including the task execution support device according to the third embodiment. A same reference sign will be attached to a configuration that is the same as that of the task execution support device 1 illustrated in FIG. 1, and the description of the duplicate configurations and the operation thereof will not be presented. A difference between the first embodiment and the third embodiment is in that the communication target determining unit 15 is replaced with a communication target determining unit 15C, and a task DB 301 is added.

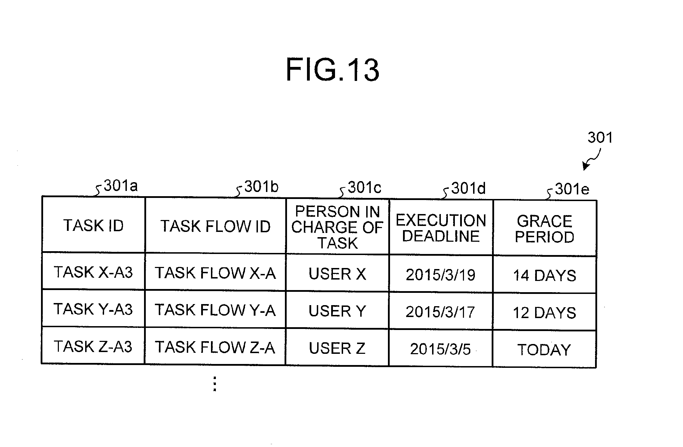

An example of the data structure of the task DB 301 will be described with reference to FIG. 13. FIG. 13 is a diagram that illustrates an example of the data structure of the task DB. As illustrated in FIG. 13, the task DB 301 stores a task flow ID 301b, a person 301c in charge of the task, an execution deadline 301d, and a grace period 301e in association with a task ID 301a. The task ID 301a represents an ID relating to the task. The task ID 301a is formed by an ID of the person in charge of the task and a prototype ID of the task. For example, in a case where the task ID 301a is "task X-A3", the task ID 301a is formed by "X" as the ID of the person in charge of the task and "A3" as the prototype ID of the task. The task flow ID 301b represents an ID relating to a task flow. The task flow ID 301b is formed by an ID of the person in charge of the task and a prototype ID of the task flow. For example, in a case where the task flow ID 301b is "task flow X-A", the task flow ID 301b is formed by "X" as the ID of the person in charge and "A" as the prototype ID of the task flow. The person 301c in charge of the task represents the ID of the person in charge who is in charge of the task represented by the task ID 301a. The execution deadline 301d represents an execution deadline of a task ID represented by the task ID 301a. The grace period 301e represents a grace period until the execution deadline 301d and represents a period until the execution deadline from the current time point. The grace period 301e may be updated at timing when the date is updated.

For example, in a case where the task ID 301 is "task Y-A3", "task flow Y-A" as the task flow ID 301b, "user Y" as the person 301c in charge of the task, "2015/3/17" as the execution deadline 301d, and "12 days" as the grace period 301e are stored.

In a case where a task execution support request is received from the user interface device 2, the communication target determining unit 15C specifies a same task flow group as the task flow including a task that is the support target based on the received support request.

In addition, the communication target determining unit 15C gets the execution status of each task flow of the specified task flow group and determines an executer who can respond to the support request among executers of the task flow group based on the obtained execution status of each task flow. For example, the communication target determining unit 15C gets the execution status of the task that is the support target included in each task flow of the specified task flow group based on the task execution state accumulating unit 112. The communication target determining unit 15C selects users whose execution status of the task that is the support target included in the task flow is currently in executing. The communication target determining unit 15C selects users who are in executing tasks on the actually same task flow among users whose execution status of the task that is the support target included in the task flow is execution-completed. In other words, the communication target determining unit 15C excludes users who are in executing tasks on actually-different task flows from the communication targets.

Furthermore, the communication target determining unit 15C excludes busy users among users who are in executing tasks on the actually same task flow from the communication targets. For example, the communication target determining unit 15C excludes users whose grace period until the execution deadline of the task that is actually in executing is a specified value or less by using the task DB 301. The reason for this is that a user not having a grace period until the execution deadline of the task is assumed to have a possibility of being late for the execution deadline of the task that is in executing being executed by him by receiving a support request. For another example, the communication target determining unit 15 excludes users whose progress rate of the task that is actually in executing is a specified value or more. The reason for this is that a task of which the progress rate is the specified value or more is assumed to be efficient if the task is completed as it is. In addition, while the communication target determining unit 15 has been described to exclude busy users from the communication targets, the exclusion of a user who has started the task, which is actually in executing, not for a long time may be canceled. The reason for this is that a user immediately after the start of a task is assumed to have no disturbance in the execution of the task that is currently in executing even when the user is set as a communication target.

In addition, the communication target determining unit 15C determines selected users as targets for communication with the support-requested user. Then, the communication target determining unit 15C transmits a user list of the determined communication targets to the user interface device 2 that has requested the support.

### Flowchart of Communication Target Determination Process

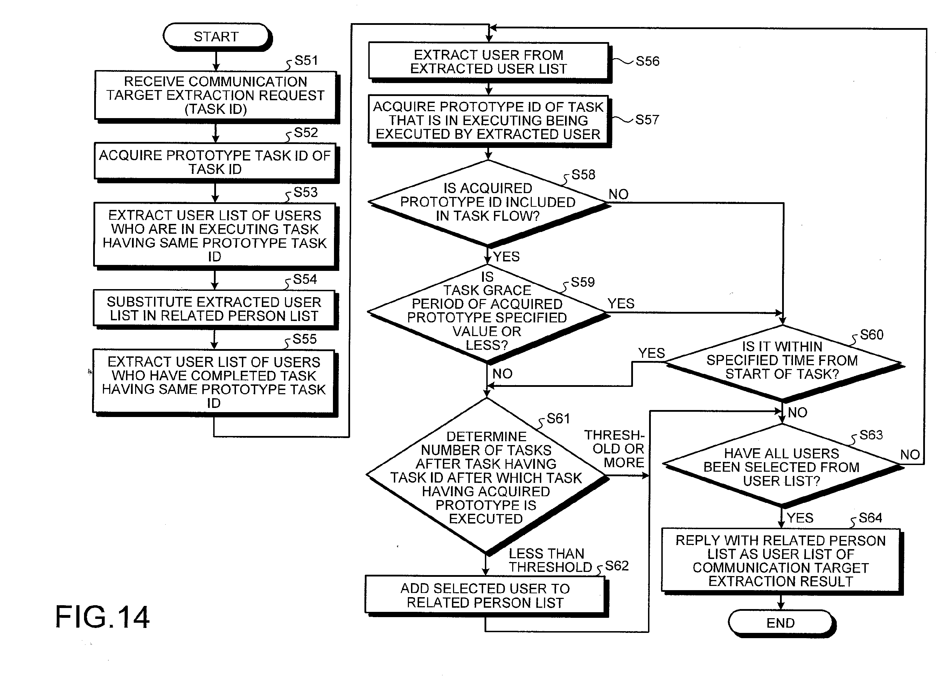

Next, the process sequence of a communication target determination process according to the third embodiment will be described with reference to FIG. 14. FIG. 14 is a diagram that illustrates an example of a flowchart of the communication target determination process according to the third embodiment. A difference between the second embodiment and the third embodiment is in that S59 and S60 are added. Steps other than S59 and S60 are the same operations, and thus, description thereof will be simplified. S31 to S38 of the second embodiment correspond to S51 to S58 of the third embodiment. S39 to S42 of the second embodiment correspond to S61 to S64 of the third embodiment.

As illustrated in FIG. 14, the communication target determining unit 15C receives a communication target extraction request including a task ID from the user interface device 2 (step S51). Then, the communication target determining unit 15C acquires a prototype task ID of the received task ID (step S52).

The communication target determining unit 15C extracts a user list of users who are in executing a task having the same prototype task ID (step S53). Then, the communication target determining unit 15C substitutes the extracted user list in a related person list (step S54). In other words, the communication target determining unit 15C selects users whose task state of the task that is the support target is actually "in executing" as communication targets.

The communication target determining unit 15C extracts a user list of users who have completed the task having the same prototype task ID (step S55).

Subsequently, the communication target determining unit 15C selects a user from the extracted user list (step S56). The communication target determining unit 15C acquires a prototype ID of a task that is in executing being executed by the selected user (step S57).

Subsequently, the communication target determining unit 15C determines whether or not the acquired prototype ID is included in a task flow including the task (step S58). In a case where the acquired prototype ID is determined not to be included in the task flow including the task (step S58: No), the communication target determining unit 15C proceeds to step S60. In other words, the communication target determining unit 15C excludes users actually executing a task on an actually different task flow from communication targets.

On the other hand, in a case where the acquired prototype ID is determined to be included in the task flow including the task (step S58: Yes), the communication target determining unit 15C determines whether or not the grace period of the task having the acquired prototype ID is a specified value or less (step S59). For example, the communication target determining unit 15C determines whether or not the grace period 301e until the execution deadline 301d of the task that is actually in executing is a specified value or less by using the task DB 301.

In a case where the grace period of the task having the acquired prototype ID is determined not to be the specified value or less (step S59: No), the communication target determining unit 15C proceeds to step S61.

On the other hand, in a case where the grace period of the task having the acquired prototype ID is determined to be the specified value or less (step S59: Yes), the communication target determining unit 15C proceeds to step S60. In other words, the communication target determining unit 15C excludes users having no grace until the execution deadline of the task that is actually in executing from the communication targets.

In step S60, the communication target determining unit 15C determines whether or not it is within a specified time after the start of the task having the acquired prototype ID (step S60). The reason for this is that a user immediately after the start of a task (within the specified time) is assumed to have no disturbance in the execution of the task that is currently in executing even when the user is set as a communication target. In a case where it is determined to be within the specified time (step S60: Yes), the communication target determining unit 15C proceeds to step S61 so as to cancel the exclusion from the communication targets.

On the other hand, in a case where it is determined not to be within the specified time (step S60: No), the communication target determining unit 15C proceeds to step S63.

In step S61, the communication target determining unit 15C determines the number of tasks after the task having the task ID after which the task having the acquired prototype ID is executed (step S61).

In a case where the task having the acquired prototype ID is determined to be a task executed after the threshold or more of the task ID (step S61: threshold or more), the communication target determining unit 15C proceeds to step S63. The communication target determining unit 15C excludes users who do not have fresh knowhow from the communication targets.

On the other hand, in a case where the task having the acquired prototype ID is determined not to be a task executed after the threshold or more after the task having the task ID (step S61: less than threshold), the communication target determining unit 15C adds the selected users to the related person list (step S62). In other words, the communication target determining unit 15 adds users who have fresh knowhow and users who are not busy among users whose task state of the task that is the support target is "completed" and users who are executing tasks on the actually same task flow. Then, the communication target determining unit 15C proceeds to step S63.

In step S63, the communication target determining unit 15C determines whether or not all the users have been selected from the user list (step S63). In a case where all the users are determined not to have been selected from the user list (step S63: No), the communication target determining unit 15C proceeds to step S56 for selecting a next user.

On the other hand, in a case where all the users are determined to have been selected from the user list (step S63: Yes), the communication target determining unit 15C performs the following process. The communication target determining unit 15C replies to the user interface device 2 of the request source with the related person list as a user list that is a result of the extraction of communication targets (step S64). Then, the communication target determining unit 15C ends the communication target determination process.

### Specific Example of Communication Determination Process according to Third Embodiment

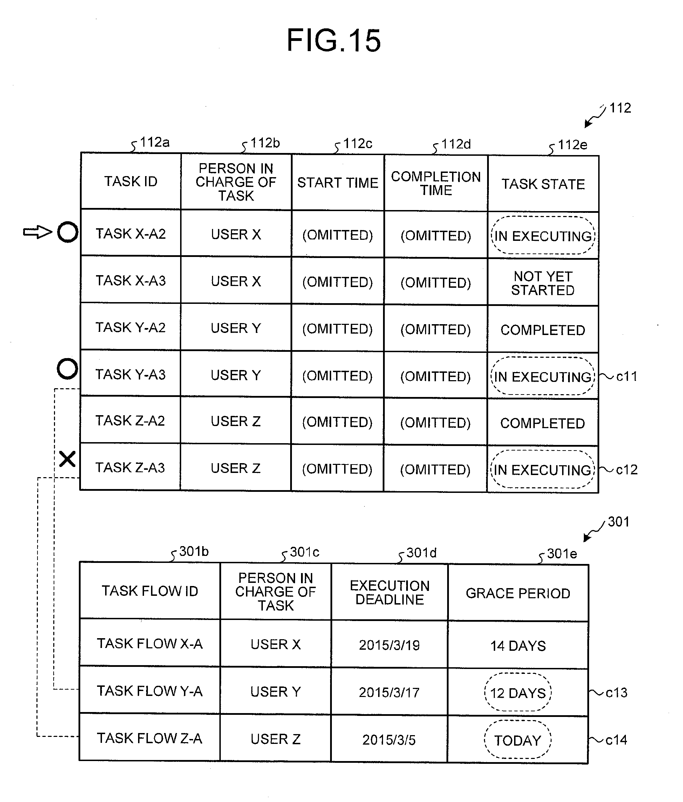

Next, a specific example of a communication determination process according to the third embodiment will be described with reference to FIG. 15. FIG. 15 is a diagram that illustrates a specific example of the communication determination process according to the third embodiment. In FIG. 15, a user interface device 2 is described as a terminal device.

As illustrated in FIG. 15, in the task execution state accumulating unit 112, a task state 112e is stored for each task ID 112a. In addition, in the task DB 301, an execution deadline 301d and a grace period 301e are stored for each task ID 112a. Here, a task flow A is assumed to be defined in the execution sequence of a task A1 (ordering specification review), a task A2 (ordering content input), a task A3 (ordering content checking), and a task A4 (approval request). In addition, "A1", "A2", "A3", and "A4" represent prototype IDs of tasks.

The user X is currently "in executing" of a task X-A2 as a task ID 112a. The user Y has "completed" a task Y-A2 as a task ID 112a and is currently "in executing" of a task Y-A3. When a terminal device 2 of the user X executes the task X-A2, a task execution support request of the task X-A2 is assumed to be transmitted to the task execution support device 1.

Then, the communication target determining unit 15C extracts a list of persons 112b in charge of tasks whose task state 112e of the task ID 112a including the prototype task ID "A2" of the support-requested task X-A2 is "in executing" from the task execution state accumulating unit 112. Here, there is no such a list.

Then, the communication target determining unit 15C extracts a list of persons 112b in charge of tasks whose task state 112e of the task ID 112a including the prototype task ID "A2" of the support-requested task X-A2 is "completed" from the task execution state accumulating unit 112. Here, since the user "Y" and the "user Z" have completed the task A2, the "user Y" and the user "Z" are extracted as persons 112b in charge of the task.

Then, the communication target determining unit 15C acquires a prototype ID of a task that is in executing being executed by the user Y and determines whether or not the acquired prototype ID is included in the task flow A. Here, since the user Y is currently in executing the task A3, "A3" is acquired as the prototype ID of the task that is in executing being executed by the user Y (c11). The prototype task ID "A3" is included in the task flow A. Similarly, since the user Z is currently in executing the task A3, "A3" is acquired as the prototype ID of the task that is in executing being executed by the user Z (c12). The prototype task ID "A3" is included in the task flow A.

In addition, the communication target determining unit 15C determines whether or not the grace period of the task that is actually in executing until the execution deadline is a specified value or less. Here, for example, the specified value is assumed to be 10 days. In the task A3 of the user Y, the grace period 301e until the execution deadline 301d is "12 days" (c13). Thus, the communication target determining unit 15C determines that the grace period until the execution deadline of the task A3 of the user Y is the specified value or less and determines the user Y as a communication target. In the task A3 of the user Z, the grace period 301e until the execution deadline 301d is "today" (c14). Thus, the communication target determining unit 15C determines that the grace period until the execution deadline of the task A3 of the user Z is not the specified value or less and excludes the user Z from the communication targets.

As a result, the communication target determining unit 15C determines the user X (the person who has requested the support) and the user Y as communication targets and transmits a user list including the user X and the user Y to the terminal 2 of the user X that is the request source. In this way, the user X can obtain the information of the task A2 (ordering content input) by communicating with the user Y. In addition, the user Z having no grace until the execution deadline of the task can avoid being late for the execution deadline of the task that is in executing by being a communication target.

### Effect of Third Embodiment

In this way, according to the third embodiment described above, the task execution support device 1 generates a first task flow relating to a plurality of tasks based on the execution sequence of a plurality of tasks defined in a plurality of pieces of task information and manages the execution status of the generated first task flow. In a case where a task execution support request is received in the management of the first task flow, the task execution support device 1 specifies a task flow group relating to the first task flow based on the received support request. The task execution support device 1 determines the execution statuses of task flows of the specified task flow group. The task execution support device 1 excludes executers having no grace until the execution deadline of the task flow that is actually in executing. According to such a configuration, the task execution support device 1 can smooth the task support in consideration of the supporter side by excluding executers having no grace until the execution deadline of the task flow, which is actually in executing, on the supporter side from supporters. In other words, executers having no grace can avoid being late for the execution deadline of the task that is in executing by being a support target.

In addition, according to the third embodiment described above, the task execution support device 1 excludes executers whose progress rate of the task that is actually in executing is a specified value or more. According to such a configuration, the task execution support device 1 excludes executers whose progress rate of the task that is actually in executing is a specified value or more, task support in consideration of the supporter side can be smoothed thereby. In other words, executers whose progress rate is a specified value or more are not set as support targets, and accordingly, the executers can efficiently complete the tasks that are in executing being executed thereby.

### [d] Fourth Embodiment

However, the task execution support device 1 according to the first embodiment, when targets for communication with a user who has requested the support for task execution are determined, extracts users who are currently executing a task that is the support target or users who executed the task in the past as communication targets. Then, the task execution support device 1 has been described to exclude users who are executing tasks of task flows not relating to a task flow including the task that is currently the support target among the users who executed the task in the past from the communication targets. The task execution support device 1 according to the second embodiment has been described to exclude users who do not have fresh knowhow from communication targets. However, the task execution support device 1 is not limited thereto, but communication targets may be excluded or determined based on a past consultation (communication) history.

Thus, a case will be described in which a task execution support device 1 according to the fourth embodiment additionally excludes or determines communication targets based on a past consultation (communication) history when targets for communication with a user who requests the support for task execution are determined.

### Configuration of Task Execution Support System according to Fourth Embodiment

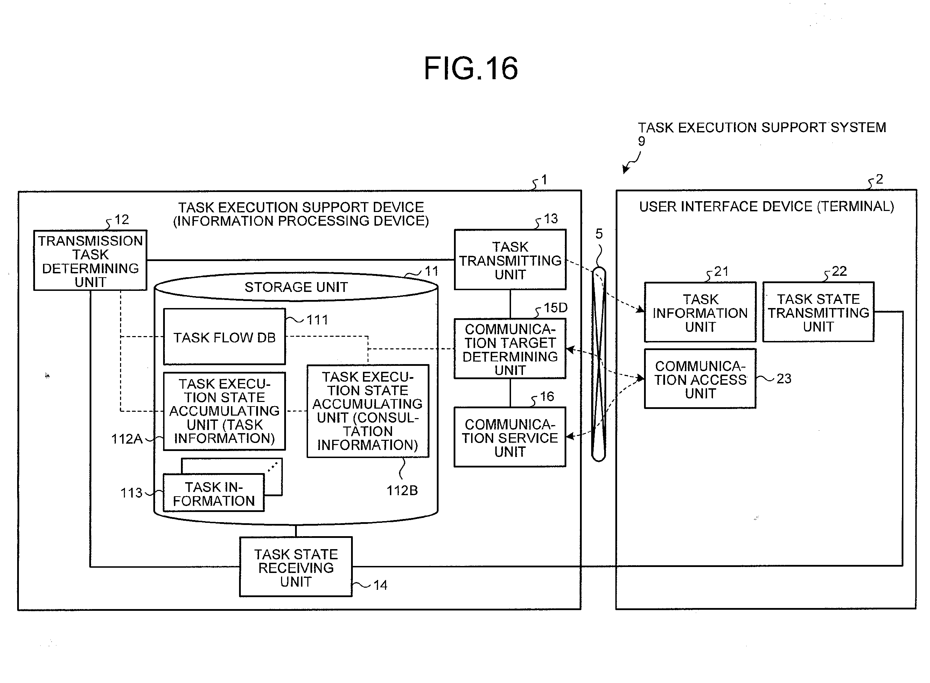

FIG. 16 is a diagram that illustrates the configuration of a system including a task execution support device according to a fourth embodiment. A same reference sign will be attached to a configuration that is the same as that of the task execution support device 1 illustrated in FIG. 1, and the description of the duplicate configurations and the operation thereof will not be presented. A difference between the first embodiment and the fourth embodiment is in that the communication target determining unit 15 is replaced with a communication target determining unit 15D, and the task execution state accumulating unit 112 is replaced with a task execution state accumulating unit (task information) 112A. In addition, another difference between the first embodiment and the fourth embodiment is in that a task execution state accumulating unit (consultation information) 112B is added.

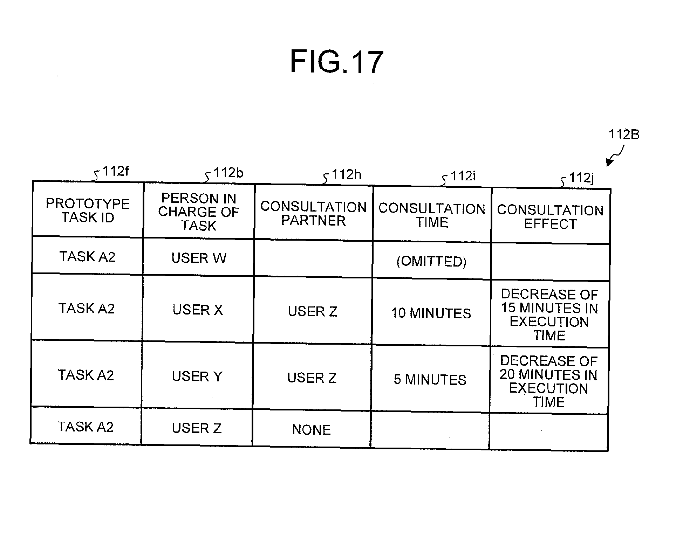

An example of the data structure of the task execution state accumulating unit (consultation information) 112B will be described with reference to FIG. 17. FIG. 17 is a diagram that illustrates an example of the data structure of the task execution state accumulating unit (consultation information). As illustrated in FIG. 17, the task execution state accumulating unit (consultation information) 112B is connected to the task execution state accumulating unit (task information) 112A. The task execution state accumulating unit (consultation information) 112B stores a prototype task ID 112f, a person 112b in charge of the task, a consultation partner 112h, a consultation time 112i, and a consultation effect 112j in association with each other. The prototype task ID 112f represents a prototype task ID of a task ID. For example, in a case where the task ID is "task X-A2", the prototype task ID 112f is "A2". The person 112b in charge of the task represents an ID of a person in charge who is in charge of a task represented by the prototype task ID 112f. The consultation partner 112h represents a person in charge who was a consultation partner in the past with a person represented by the person 112b in charge of the task for the task represented by the prototype task ID 112f. The consultation time 112i represents a consultation time with a consultation partner represented by the consultation partner 112h of the person in charge represented by the person 112b in charge of the task. The consultation effect 112j represents an effect of the consultation.

For example, in a case where the prototype task ID 112f is "task A2", "user X" as the person 112b in charge of the task, "user Z" as the consultation partner 112h, "10 minutes" as the consultation time 112i, and "a decrease of 15 minutes in execution time" as the consultation effect 112j are stored.

In a case where a task execution support request is received from the user interface device 2, the communication target determining unit 15D specifies a task flow group that is the same as a task flow including a task that is the support target based on the received support request.

In addition, the communication target determining unit 15D gets the execution status of each task flow of the specified task flow group and determines executers who can respond to the support request among executers of the task flow group based on the obtained execution status of each task flow. For example, the communication target determining unit 15D gets an execution status of the task that is the support target included in each task flow of the specified task flow group based on the task execution state accumulating unit (task information) 112A. The communication target determining unit 15D selects users whose execution status of the task that is the support target included in the task flow is currently in executing. The communication target determining unit 15D selects users executing tasks on the actually same task flow from among users whose execution status of the task that is the support target included in the task flow is execution-completed. In other words, the communication target determining unit 15D excludes users executing tasks on actually different task flows from communication targets.

In addition, the communication target determining unit 15D additionally determines executers who can respond to a support request among executers of the task flow group based on the past support history. For example, the communication target determining unit 15D determines whether or not the selected users are appropriate as consultation partners based on the task execution state accumulating unit (consultation information) 112B. For example, in a case where the consultation effect 112j is present by consulting with each user set as the consultation partner 112h among the selected users, the communication target determining unit 15D determines that the user is appropriate as the consultation partner. Then, the communication target determining unit 15D determines users having the consultation effect 112j among the selected users as communication targets and excludes the other users from the communication targets.

Furthermore, the communication target determining unit 15D determines the users determined to be appropriate as the consultation partner 112h among the selected users as communication targets and excludes the other users from the communication targets. Then, the communication target determining unit 15D transmits a user list of the determined communication targets to the user interface device 2 that has requested the support.

### Flowchart of Communication Target Determination Process

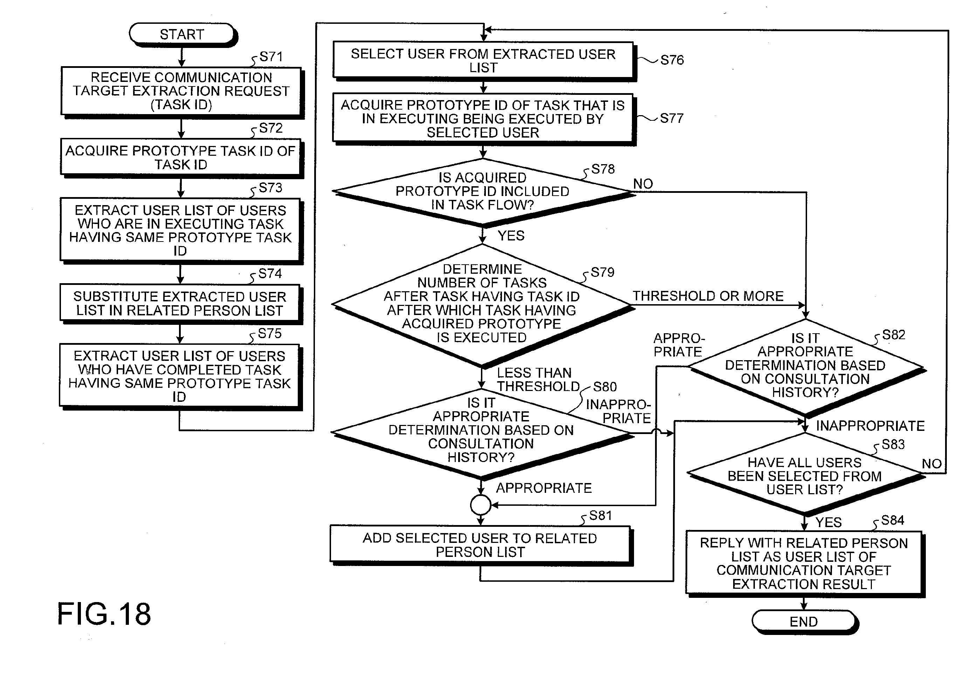

Next, the process sequence of a communication target determination process according to the fourth embodiment will be described with reference to FIG. 18. FIG. 18 is a diagram that illustrates an example of a flowchart of the communication target determination process according to the fourth embodiment. A difference between the second embodiment and the fourth embodiment is in that S80 and S81 are added. Steps other than S80 and S81 are the same operations, and thus, description thereof will be simplified. S31 to S39 of the second embodiment correspond to S71 to S79 of the fourth embodiment. S40 to S42 of the second embodiment correspond to S81, S83, and S84 of the fourth embodiment.

As illustrated in FIG. 18, the communication target determining unit 15D receives a communication target extraction request including a task ID from the user interface device 2 (step S71). Then, the communication target determining unit 15D acquires a prototype task ID of the received task ID (step S72).

The communication target determining unit 15D extracts a user list of users who are in executing a task having the same prototype task ID (step S73). Then, the communication target determining unit 15D substitutes the extracted user list in a related person list (step S74). In other words, the communication target determining unit 15D selects users whose task state of the task that is the support target is actually "in executing" as communication targets.

The communication target determining unit 15D extracts a user list of users who have completed the task having the same prototype task ID (step S75).

Subsequently, the communication target determining unit 15D selects a user from the extracted user list (step S76). The communication target determining unit 15D acquires a prototype ID of a task that is in executing being executed by the selected user (step S77).

Subsequently, the communication target determining unit 15D determines whether or not the acquired prototype ID is included in a task flow including the task (step S78). In a case where the acquired prototype ID is determined not to be included in the task flow including the task (step S78: No), the communication target determining unit 15D executes the following process. The communication target determining unit 15D proceeds to step S82 for determining whether or not users executing tasks on actually different task flows are appropriate as consultation partners.

On the other hand, in a case where the acquired prototype ID is determined to be included in the task flow including the task (step S78: Yes), the communication target determining unit 15D executes the following process. The communication target determining unit 15D determines the number of tasks after the task having the task ID after which the task having the acquired prototype ID is executed (step S79).

In a case where the task having the acquired prototype ID is determined to be a task executed after the threshold or more of the task ID (step S79: threshold or more), the communication target determining unit 15D performs the following process. The communication target determining unit 15D proceeds to step S82 for determining whether or not a user not having fresh knowhow is appropriate as a consultation partner.

On the other hand, in a case where the task having the acquired prototype ID is determined not to be a task executed after the threshold or more of the task ID (step S79: less than threshold), the communication target determining unit 15D performs the following process. The communication target determining unit 15D proceeds to step S80 for determining whether or not a selected user having fresh knowhow is appropriate as a consultation partner.

In step S80, the communication target determining unit 15D determines whether or not the selected user is appropriate based on the consultation history (step S80). For example, the communication target determining unit 15D determines whether or not the selected user is appropriate as the consultation partner based on the task execution state accumulating unit (consultation information) 112B.

In a case where the selected user is determined to be appropriate as the consultation partner (step S80: appropriate), the communication target determining unit 15D adds the selected user to the related-person list (step S81). In other words, the communication target determining unit 15D selects users who are appropriate as consultation partners among users having fresh knowhow. Then, the communication target determining unit 15D proceeds to step S83. On the other hand, in a case where the selected user is determined to be inappropriate as the consultation partner (step S80: inappropriate), the communication target determining unit 15D proceeds to step S83.

In step S82, the communication target determining unit 15D determines whether or not the selected user is appropriate based on the consultation history (step S82). For example, the communication target determining unit 15D determines whether or not the selected user is appropriate as the consultation partner based on the task execution state accumulating unit (consultation information) 112B.

In a case where the selected user is determined to be appropriate as the consultation partner (step S82: appropriate), the communication target determining unit 15D proceeds to step S81 for adding the selected user to the related-person list. Even in a case where the task that is in executing being executed by the selected user is not included in the task flow, when the user is appropriate as the consultation partner, the communication target determining unit 15D selects the user. On the other hand, in a case where the selected user is determined not to be appropriate as the consultation partner (step S82: inappropriate), the communication target determining unit 15D proceeds to step S83.

In step S83, the communication target determining unit 15D determines whether or not all the users have been selected from the user list (step S83). In a case where all the users are determined not to have been selected from the user list (step S83: No), the communication target determining unit 15D proceeds to step S76 for selecting a next user.

On the other hand, in a case where all the users are determined to have been selected from the user list (step S83: Yes), the communication target determining unit 15D performs the following process. The communication target determining unit 15D replies to the user interface device 2 of the request source with the related person list as a user list that is a result of the extraction of communication targets (step S84). Then, the communication target determining unit 15D ends the communication target determination process.

### Specific Example of Communication Determination Process according to Fourth Embodiment

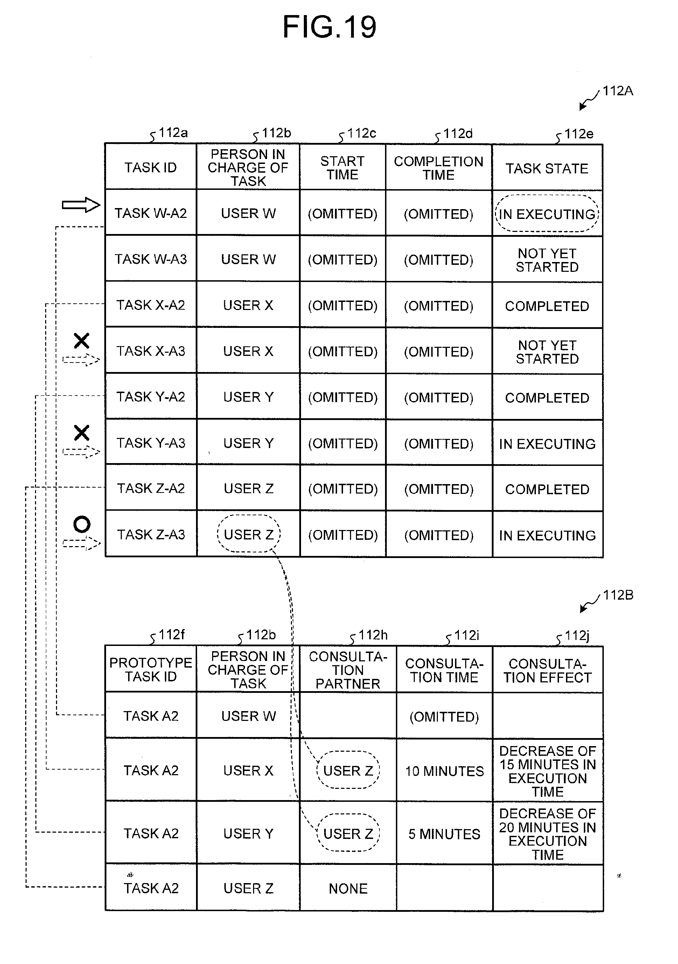

Next, a specific example of a communication determination process according to the fourth embodiment will be described with reference to FIG. 19. FIG. 19 is a diagram that illustrates a specific example of the communication determination process according to the fourth embodiment. In FIG. 19, a user interface device 2 is described as a terminal device.

As illustrated in FIG. 19, in the task execution state accumulating unit (task information) 112A, a person 112b in charge of the task and a task state 112e are stored for each task ID 112a. In the task execution state accumulating unit (consultation information) 112B, a prototype task ID 112f, a consultation partner 112h, a consultation time 112i, and a consultation effect 112j are stored in connection with the task execution state accumulating unit (task information) 112A. Here, a task flow A is assumed to be defined in the execution sequence of a task A1 (ordering specification review), a task A2 (ordering content input), a task A3 (ordering content checking), and a task A4 (approval request). In addition, "A1", "A2", "A3", and "A4" represent prototype IDs of tasks.

A user W is currently "in executing" of a task W-A2 as a task ID 112a. A user X "completes" a task X-A2 as a task ID 112a and does not start a task X-A3. A user Y "completes" a task Y-A2 as a task ID 112a and is "in executing" of a task Y-A3. A user Z "completes" a task Z-A2 as a task ID 112a and is "in executing" of a task Z-A3.

When a terminal device 2 of the user W executes the task W-A2, a task execution support request of the task W-A2 is assumed to be transmitted to the task execution support device 1.

Then, the communication target determining unit 15D extracts a list of persons 112b in charge of tasks whose task state 112e of the task ID 112a including the prototype task ID "A2" of the support-requested task W-A2 is "in executing" from the task execution state accumulating unit (task information) 112A. Here, there is no such a list.

Then, the communication target determining unit 15D extracts a list of persons 112b in charge of tasks whose task state 112e of the task ID 112a including the prototype task ID "A2" of the support-requested task W-A2 is "completed" from the task execution state accumulating unit (task information) 112A. Here, since the user X, the user Y, and the user Z have completed the task A2, "user X", "user Y", and "user Z" are extracted as the persons 112b in charge of tasks.

Then, the communication target determining unit 15D determines whether or not the user extracted from the task execution state accumulating unit (consultation information) 112B is appropriate as the consultation partner. Here, regarding the support-requested prototype task ID "A2", the user Z has a result of the consultation effect 112j of decreasing the execution time. Thus, the communication target determining unit 15D determines the user Z to be the communication target. Then, the communication target determining unit 15D excludes the user X and the user Y having no result of the consultation effect 112j from the communication targets.

### Effect of Fourth Embodiment

In this way, the task execution support device 1 generates a first task flow relating to a plurality of tasks based on the execution sequence of a plurality of tasks defined in a plurality of pieces of task information and manages the execution status of the generated first task flow. In a case where a task execution support request is received in the management of the first task flow, the task execution support device 1 specifies a task flow group relating to the first task flow based on the received support request. The task execution support device 1 gets the execution statuses of task flows of the specified task flow group. The task execution support device 1 extracts executers who can respond to the support request among the executers of the task flows based on the obtained execution statuses of the task flows. Then, the task execution support device 1 additionally extracts executers who can respond to the support request among the executers of the task flows based on the past support history. According to such a configuration, by extracting executers who can respond to the support request by using the past support history, the task execution support device 1 can set executers having a result as task supporters, and the task support can be smoothly executed.

### Others

In addition, in the first to fourth embodiments described above, the communication target determining unit 15 may further rank users determined to be communication targets and transmit the determined users to the user interface device 2. For example, a user having a higher consultation effect of the task that is the support target may be ranked to be higher. In addition, a user having a shorter execution time of the task that is the support target may be ranked to be higher. Furthermore, a user having a plurality of consultations as a consultation partner of the task that is the support target may be ranked to be high. In addition, users of the same organization as that of the user requesting the support may be ranked to be high. In this way, on the user interface device 2 side that has received a user list, the user can easily select an optimal user when the user selects a communication partner. In addition, the priority level of a user who once becomes a target for the exclusion may be lowered and be added to communication targets. Such a case is effective in a case where the number of users determined to be the communication targets is small.

In addition, in the first to fourth embodiment described above, each constituent element of each device illustrated in the drawings does not necessarily need to be physically configured as illustrated in the drawings. In other words, a specific form of distribution/integration of each device is not limited to that illustrated in the drawings, but the whole or a part thereof may be configured to be functionally or physically distributed or integrated in an arbitrary unit based on various loads, use statuses, and the like. For example, the communication target determining unit 15 may be distributed into a specifying unit that specifies a same task flow group as the task flow of the task that is the support target and a determination unit that determines executers who can respond to a support request among executers of the task flow group. In addition, the storage unit 11 may be configured to be connected through a network as an external device of the task execution support device 1.

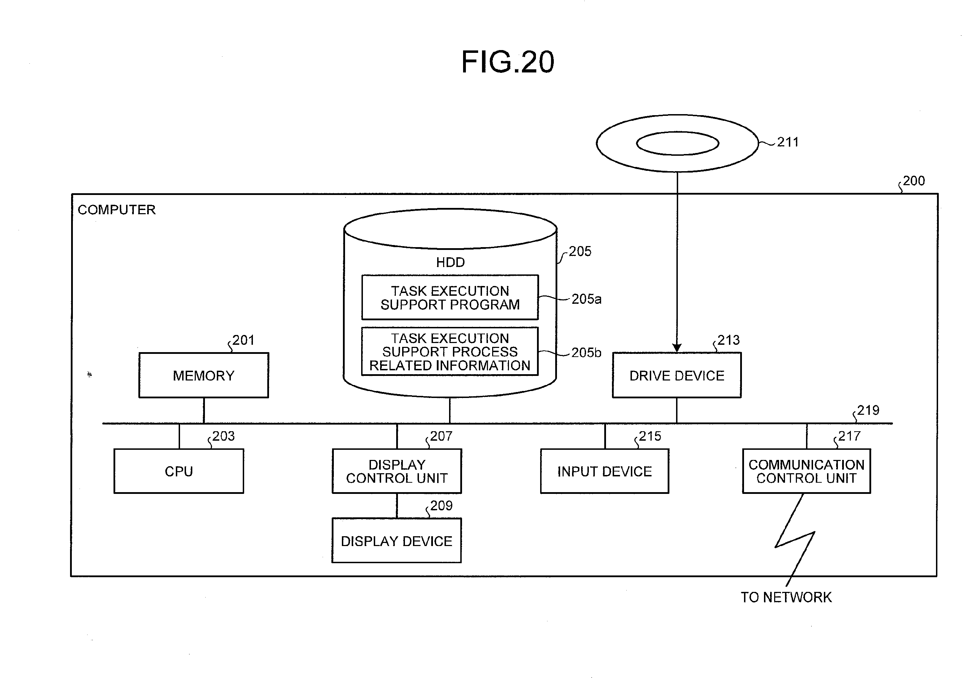

Furthermore, various processes described in the embodiments described above may be realized by executing a program prepared in advance by using a computer such as a personal computer or a workstation. Thus, hereinafter, an example of a computer that executes a task execution support program realizing the same functions as those of the task execution support device 1 illustrated in FIG. 1 will be described. FIG. 20 is a diagram that illustrates an example of the computer executing the task execution support program.

As illustrated in FIG. 20, a computer 200 includes: a CPU 203 that executes various calculation processes; an input device 215 that receives an input of data from a user; and a display control unit 207 that controls a display device 209. In addition, the computer 200 includes a drive device 213 that reads a program and the like from a storage medium and a communication control unit 217 that transmits/receives data to/from another computer through the network. Furthermore, the computer 200 includes a memory 201 that temporarily stores various kinds of information and an HDD 205. The memory 201, the CPU 203, the HDD 205, the display control unit 207, the drive device 213, the input device 215, and the communication control unit 217 are interconnected through a bus 219.

The drive device 213, for example, is a device for a removable disk 211. The HDD 205 stores a task execution support program 205a and task execution support process related information 205b.

The CPU 203 reads the task execution support program 205a, expands the read program in the memory 201, and executes the expanded program as a process. Such a process corresponds to each functional unit of the task execution support device 1. The task execution support process related information 205b corresponds to the task flow DB 111, the task execution state accumulating unit 112, and the task information 113. For example, the removable disk 211 stores various kinds of information such as the task execution support program 205a.

In addition, the task execution support program 205a may be configured not to be necessarily stored in the HDD 205 from the start. For example, the program is stored in a "portable physical medium" such as a flexible disk (FD), a CD-ROM, a DVD disc, a magneto-optical disk, or an IC card inserted into the computer 200. Then, the computer 200 may be configured to read the task execution support program 205a therefrom and execute the task execution support program 205a.

Accordingly, a smooth task support can be achieved.

## Claims

1. A task execution support method to be performed by a computer (1), the task execution support method comprising:
Specifying (S107), when receiving an execution support request of a task included in a first task group, one or a plurality of second task groups relating to the first task group based on the received execution support request, the first task group including a plurality of tasks based on an execution sequence;
getting (S108) an execution status of each task group of the specified one or plurality of second task groups;
extracting (S108) executers who are able to respond to the support request among executers of the determined each task group based on the obtained execution status of the each task group; and
providing (S109-S113) support information of task execution executed by the extracted executers for a support requester of the task execution.

2. The task execution support method according to claim 1, wherein, the extracting (S108) includes excluding executers having disturbances in execution of tasks that are actually in executing from executers who have completed execution of the task requesting support among the executers of the each task group based on the obtained execution status of the each task group.

3. The task execution support method according to claim 2, wherein, the extracting (S108) includes excluding executers actually executing tasks of task groups other than the first task group.

4. The task execution support method according to claim 2,
wherein, the extracting (S108) includes excluding executers having no grace until execution deadlines of task groups that are actually in executing.

5. The task execution support method according to claim 2,
wherein, the extracting (S108) includes excluding executers whose progress rates of tasks that are actually in executing are specified value or more.

6. The task execution support method according to claim 1,
wherein, the extracting (S108) includes excluding executers who have completed execution of the task requesting support among the executers of the each task group based on the obtained execution status of the each task group and executers who are not within a predetermined condition range in relation between the tasks that are actually executed by the extracted executers and the task requesting support.

7. The task execution support method according to claim 6,
wherein, the extracting (S108) includes excluding executers who are actually executing tasks separate from the task requesting the support by a predetermined number of tasks.

8. The task execution support method according to claim 6,
wherein, the extracting (S108) includes excluding executers who are actually executing tasks exceeding a predetermined period from the task requesting the support.

9. The task execution support method according to claim 1, wherein, the extracting (S108) includes extracting executers who are able to respond to the support request among the executers of the each task group also based on past support histories.

10. The task execution support method according to claim 1, wherein, the task execution support method further comprises, in a case where the executers extracted in the extracting of executers have completed the task requesting support, transmitting (S216) information at the time of task execution to the extracted executers.

11. A task execution support device comprising:
a specifying unit (15) that specifies, when receiving an execution support request of a task included in a first task group, one or a plurality of second task groups relating to the first task group based on the received execution support request, the first task group including a plurality of tasks based on an execution sequence;
a status determining unit (15) that gets an execution status of each task group of the one or plurality of second task groups specified by the specifying unit;
a supportable person extracting unit (15) that extracts executers who are able to respond to the support request among executers of the each task group based on the execution status of the each task group determined by the status determining unit; and
a support information providing unit (16) that provides support information of task execution executed by the executers extracted by the supportable person extracting unit for a support requester of the task execution.

12. A task execution support program that causes a computer to execute a process comprising:
specifying (S107), when receiving an execution support request of a task included in a first task group, one or a plurality of second task groups relating to the first task group based on a the received execution support request, the first task group including a plurality of tasks based on an execution sequence;
getting (S108) an execution status of each task group of the specified one or plurality of second task groups;
extracting (S108) executers who are able to respond to the support request among executers of the determined each task group based on the obtained execution status of the each task group; and
providing (S109-S113) support information of task execution executed by the extracted executers for a support requester of the task execution.
